# EUROPEAN PATENT APPLICATION

(11) **EP 2 479 476 A1**
(43) Date of publication of application: **25.07.2012**
(21) Application number: 10816960.8
(22) Date of filing: 12.07.2010
(51) Int. Cl.: F21S 2/00, F21V 23/00, F21V 29/00, F21Y 103/00, F21Y 103/025

(54) **LIGHTING DEVICE, DISPLAY DEVICE, AND TELEVISION RECEIVER**

(30) Priority: 15.09.2009 JP 2009213494
(71) Applicant: Sharp Kabushiki Kaisha, Osaka-shi, Osaka 545-8522 (JP)
(72) Inventor: KUROMIZU, Yasumori, Osaka-shi, Osaka 545-8522 (JP)
(74) Representative: Müller-Boré & Partner Patentanwälte
(86) International application number: PCT/JP2010/061772
(87) International publication number: WO 2011/033847

(57) **Abstract**

A lighting device includes a hot cathode tube 17, and a chassis 14 housing the hot cathode tube 17. The hot cathode tube 17 includes a glass tube 17a and a filament 17d arranged inside the glass tube 17a. An end-wall section 60 on one end of the glass tube 17a in the axial direction thereof has an exhaust pipe 64 projecting from the end-wall section 60 so as to be away from the filament 17d. A sealed section 65 of the exhaust pipe 64 is arranged outside the chassis 14, and the linear distance N1 between the filament 17d and the sealed section 65 of the exhaust pipe 64 is set greater than the greatest linear distance N2 between the filament 17d and the end-wall section 60.

## Description

### TECHNICAL FIELD

The present invention relates to a lighting device, a display device and a television receiver.

A liquid crystal panel used for, for example, a liquid crystal display device such as a liquid crystal television set does not emit light, and therefore requires a backlight unit separately as a lighting device. This backlight unit is configured to be installed on the back side (the side opposite to the side having the display surface) of the liquid crystal panel. The backlight unit includes a chassis, a face of which toward the liquid crystal panel is open; and a light source housed in the chassis (Patent Document 1 mentioned below). For example, a discharge tube such as a cathode-ray tube is used as a light source of a backlight unit thus configured.

Patent Document 1: Japanese Unexamined Patent Publication No. 2006-114445

### Problem to be Solved by the Invention

The brightness of a discharge tube in general changes as the ambient temperature changes. This is because, as the ambient temperature changes, the temperature of a spot (the coldest spot) that has the lowest temperature inside the tube changes, resulting in a change in vapor pressure of mercury enclosed in the tube, which further changes luminous efficiency. Specifically, while the brightness is the highest when the temperature of the coldest spot is at a particular temperature (an appropriate temperature), the brightness decreases when the temperature of the coldest spot becomes either above or below the appropriate temperature. Therefore, when the ambient temperature rises as the discharge tube produces heat while being switched on, the coldest spot is brought above the appropriate temperature, which invites a risk that the brightness decreases.

### DISCLOSURE OF THE PRESENT INVENTION

The present invention was made in view of the foregoing circumstances, and aims at providing a lighting device enabled to prevent the brightness thereof from decreasing due to temperature, and a display device and a television receiver which use the lighting device.

### Means for Solving the Problem

As means for achieving the above aim, a lighting device of the present invention includes a discharge tube, and a chassis housing the discharge tube. The discharge tube includes a tube section and an electrode arranged inside the tube section. The tube section has an end wall on one end of the tube section in the axial direction thereof and a projecting portion projecting from the end wall so as to be away from the electrode. The projecting portion has a projecting end that is provided outside the chassis. A linear distance between the electrode and the projecting end of the projecting portion is greater than a greatest linear distance between the electrode and the end wall on the one end.

According to the present invention, the projecting end of the projecting portion is provided outside the chassis. Therefore, when the electrode produces heat during lighting of the discharge tube, heat dissipation from the projecting end is facilitated and the temperature of the projecting end becomes lower compared to a configuration having projecting end inside the chassis. Additionally, the linear distance between the electrode and the projecting end of the projecting portion is greater than the greatest linear distance between the electrode and the end wall on the one end. Therefore, the projecting end of the projecting portion is located such that a distance between the projecting end and the electrode is greater than a distance between the end wall on the one end (every portion) and the electrode. Therefore, when the electrode produces heat during lighting of the discharge tube, the heat is unlikely to reach the projecting end that is located at a position farther away from the electrode. Compared to this, heat is likely to reach the end wall on the one end that is closer to the electrode than the projecting end. Therefore, the projecting end has a low temperature. Accordingly, the coldest spot (a portion that has the lowest temperature inside the tube section) occurs at the projecting end of the projecting portion (more precisely, the inner surface of the projecting end), and this prevents a temperature of the coldest spot from rising.

The projecting end corresponds to the coldest spot in the present invention, and a configuration in which the projecting end is provided outside the chassis enables to prevent the coldest spot from rising. Therefore, a projecting amount of the tube section projecting to the outside of the chassis can be reduced as compared to a configuration where the coldest spot occurs at any other portion. According to the above configuration, brightness of the discharge tube is less likely to be deteriorated due to rising of the temperature. Also, the projecting amount of the tube section projecting to the outside of the chassis is reduced and this reduces the width of the lighting device.

Further, the tube section may include an exhaust projecting from the one end of the tube section and configured to exhaust air from the tube section in manufacturing the discharge tube. The exhaust pipe may be configured as the projecting portion by closing an end of the exhaust pipe. The exhaust pipe is used as the projecting portion and another projecting portion is not necessary to be newly formed, and this reduces the manufacturing cost.

Further, the lighting device may further include a power source configured to supply driving power to the discharge tube. The discharge tube may include a ferrule configured to electrically connect the electrode and the power source to each other. The ferrule may be attached to the tube section to cover the projecting portion. This configuration allows heat dissipation from the projecting portion to the ferrule, and this prevents a temperature of the projecting end (the coldest spot) from rising during lighting of the discharge tube.

Further, the chassis may have a cutout penetrating a wall section of the chassis. The cutout may be provided as a tube attachment section to which the tube section is attached with penetrating the cutout. The tube section is attached to the cutout and accordingly the projecting end of the projecting portion is provided outside the chassis. Note that applicable forms of the cutout include not only "a closed hole (that is not open outward) " formed by cutting out a inner portion of the wall section of the chassis, but also a groove-like hole (one part of which is open outward) formed by cutting out a marginal section in the wall section of the chassis. The cutout may have any form as long as the cutout penetrates the chassis so as to communicate outside with inside of the chassis.

Further, the lighting device may further include a heat dissipation member provided between an edge of the cutout and the tube section. The heat dissipation member may be configured to dissipate heat from the tube section toward the chassis. With this configuration, heat generated during lighting of the discharge tube is dissipated to the chassis via the heat dissipation member. A temperature of the projecting end (the coldest spot) of the projecting portion is less likely to rise.

Further, the discharge tube may include a plurality of discharge tubes that is arranged in parallel with each other in the chassis. The plurality of discharge tubes may include first discharge tubes and second discharge tubes. Each of the first discharge tubes may have the projecting end of the projecting portion that is disposed outside the chassis and projects from one end of the chassis in a width direction of the chassis. Each of the second discharge tubes may have the projecting end of the projecting portion that is disposed outside the chassis and projects from another end of the chassis in a width direction of the chassis. The first discharge tubes and the second discharge tubes may be alternately arranged in parallel with each other.

Further, the discharge tube may include a plurality of discharge tubes that is arranged in parallel with each other in the chassis. The discharge tubes may include a plurality of discharge tube groups each including at least two adjacent discharge tubes, and the discharge tube groups may include a first discharge tube group and a second discharge tube group. The projecting end of the projecting portion of each discharge tube of the first discharge tube group may be disposed outside the chassis and project from one end of the chassis in a width direction of the chassis. The projecting end of the projecting portion of each discharge tube of the second discharge tube group may be disposed outside the chassis and project from another end of the chassis in a width direction of the chassis. The first discharge tube group and the second discharge tube group may be alternately arranged to be parallel to each other.

Further, the discharge tube may include a plurality of discharge tubes that is arranged in parallel with each other in the chassis. The projecting end of the projecting portion may be provided outside the chassis so as to project from one end of the chassis in a width direction of the chassis.

Further, the discharge tube may include a plurality of discharge tubes that is arranged in parallel with each other in the chassis. Only the discharge tubes that are arranged in a middle portion of the chassis in an arrangement direction of the discharge tubes may have projecting ends of the projecting portions that are provided outside the chassis.

Further, the discharge tube may be substantially L-shaped.

Further, the discharge tube may be substantially U-shaped.

Further, the discharge tube may have a meandering shape.

Further, the tube section may include a plurality of tube sections and the discharge tube may be formed by joining the plurality of tube sections together.

Further, a hot cathode tube may be used as the discharge tube. This achieves improved brightness.

Next, in order to solve the above problem, a display device of the present invention is characterized by including the above described lighting device, and a display panel configured to provide display by using light from the lighting device.

Further, a liquid crystal panel may be used as an example of the display panel. The thus configured display device is applicable, as a liquid crystal display device, for a desktop screen for various applications such as a television and a personal computer, and is particularly suitable for a large screen.

Further, the display device may further include a housing member configured to house the display panel and the lighting device. The housing member may include an opening section through which a display surface of the display panel is exposed, and a frame-like section surrounding the opening section. The projecting end of the projecting portion may be provided in the housing member.

Further, the display device may further include a cooling mechanism provided in the housing member. The cooling mechanism may be configured to cool the projecting end of the projecting portion. This prevents a temperature of the projecting end from rising more effectively.

Further, the cooling mechanism may include a ventilation opening penetrating through the housing member. Air is exhausted through the ventilation opening from the housing member. Accordingly, the projecting end is cooled down and a temperature of the coldest spot is less likely to rise.

Further, the cooling mechanism may include a cooling fan configured to send air toward the projecting end of the projecting portion and thereby cool the projecting end of the projecting portion.

Further, the cooling mechanism may include a cooling element configured to come in contact with the projecting end of the projecting portion and thereby cool the projecting end of the projecting portion.

Further, the cooling mechanism may include a heat pipe configured to transfer heat of the projecting end of the projecting portion to the housing member.

Further, the cooling mechanism may include a refrigerant configured to cool the projecting end of the projecting portion, a circulation pipe in which the refrigerant is contained, and a refrigerant circulation pump connected to the circulation pipe and configured to circulate the refrigerant within the circulation pipe. Water may be used as an example of the refrigerant.

Next, in order to solve the above problem, a television receiver of the present invention is characterized by including the above display device.

### Advantageous Effect of the Invention

According to the present invention, it is made possible to provide: a lighting device enabled to prevent brightness thereof from decreasing due to temperature; and a display device and a television receiver that use the lighting device.

### BRIEF DESCRIPTION OF THE DRAWINGS

FIG. 1 is an exploded perspective view showing a schematic configuration of a television receiver according to one embodiment of the present invention;
Fig. 2 is an exploded perspective view showing a schematic configuration of a liquid crystal display device included in the television receiver of Fig. 1;
Fig. 3 is a cross-sectional view showing a sectional configuration of the liquid crystal display device of Fig. 2, taken along a direction parallel to the short sides thereof;
Fig. 4 is a cross-sectional view showing a sectional configuration of the liquid crystal display device of Fig. 2, taken along a direction parallel to the long sides thereof;
FIG. 5 is an enlarged view showing a larger view of the vicinity of an end-wall section of a hot cathode tube;
FIG. 6 is a schematic view showing an aspect in which the hot cathode tube is being attached to a chassis;
FIG. 7 is a schematic view showing an aspect in which the hot cathode tube has been attached to the chassis;
FIG. 8 is an enlarged view showing a larger view of the vicinity of an end-wall section of a hot cathode tube in a comparative example;
Fig. 9 is a schematic view showing the configuration of a backlight unit according to a second embodiment;
Fig. 10 is a schematic view showing an aspect in which a glass tube of a hot cathode tube has a U shape with corners in straight angle;
Fig. 11 is a schematic view showing the configuration of a backlight unit according to a third embodiment;
FIG. 12 is a schematic view showing an aspect in which a glass tube of a hot cathode tube has a sigmoid shape;
Fig. 13 is a schematic view showing the configuration of a backlight unit according to a fourth embodiment;
Fig. 14 is a schematic view showing the configuration of a backlight unit according to a fifth embodiment;
Fig. 15 is a schematic view showing the configuration of a backlight unit according to a sixth embodiment;
Fig. 16 is a schematic view showing the configuration of a backlight unit according to a seventh embodiment;
Fig. 17 is a schematic view showing the configuration of a liquid crystal display device according to an eighth embodiment;
Fig. 18 is a schematic view showing the configuration of a liquid crystal display device according to a ninth embodiment;
Fig. 19 is a schematic view showing the configuration of a liquid crystal display device according to a tenth embodiment;
Fig. 20 is a schematic view showing the configuration of a liquid crystal display device according to an eleventh embodiment;
Fig. 21 is a schematic view showing the configuration of a liquid crystal display device according to a twelfth embodiment;
Fig. 22 is a schematic view showing the configuration of a liquid crystal display device according to a thirteenth embodiment;
Fig. 23 is a schematic view showing the configuration of a backlight unit according to a fourteenth embodiment;
Fig. 24 is a schematic view showing the configuration of a backlight unit according to a fifteenth embodiment;
Fig. 25 is a schematic view showing the configuration of a backlight unit according to a sixteenth embodiment;
Fig. 26 is a schematic view showing the configuration of a backlight unit according to a seventeenth embodiment; and
Fig. 27 is a schematic view showing the configuration of a backlight unit according to an eighteenth embodiment.

### BEST MODE FOR CARRYING OUT THE INVENTION

### <First embodiment>

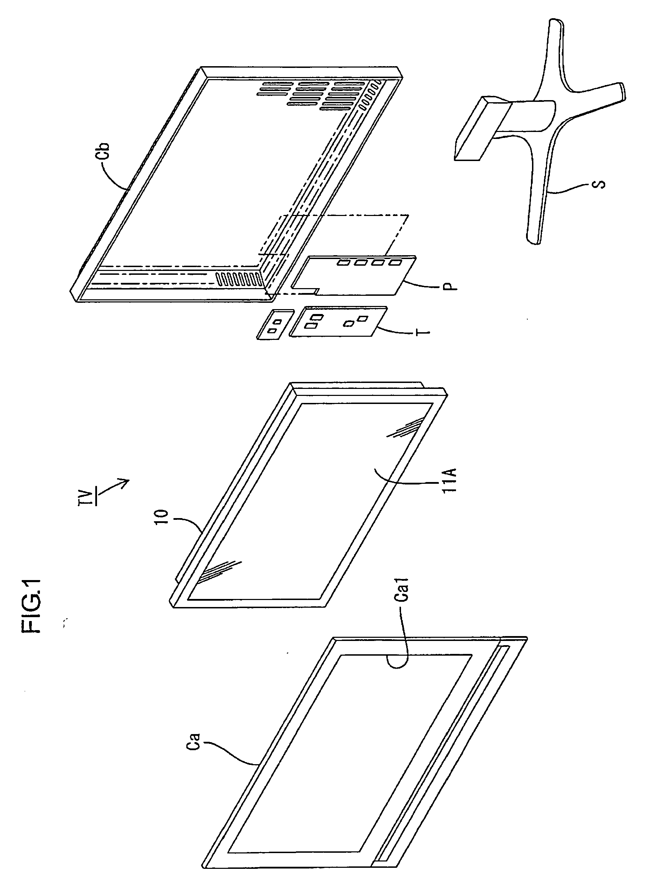

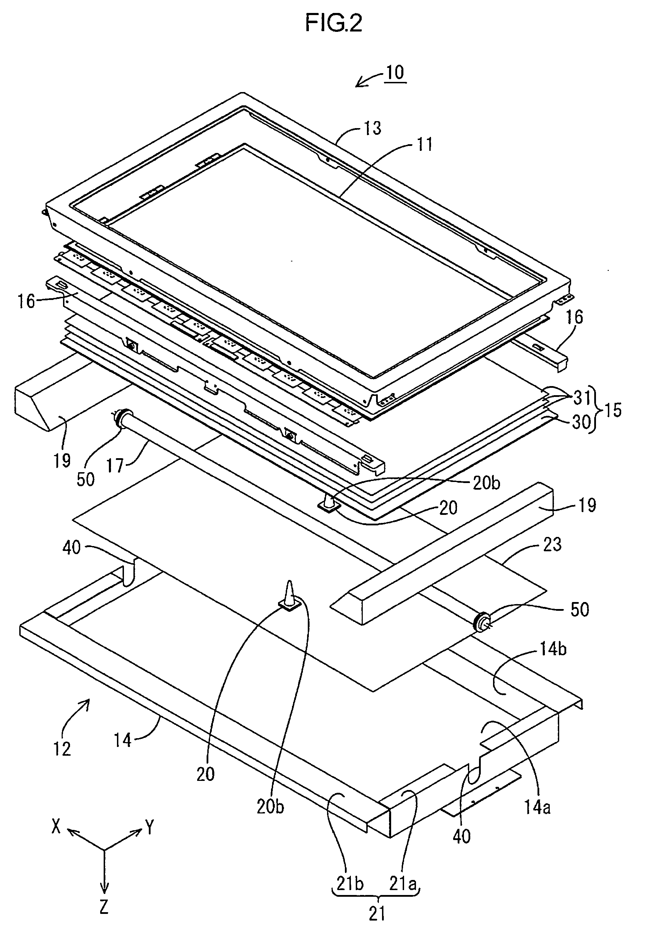

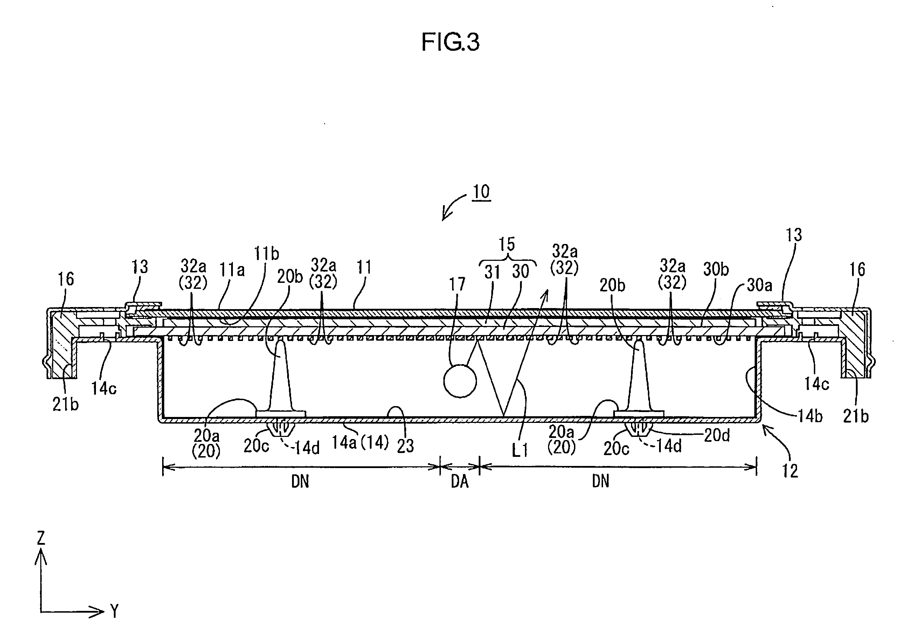

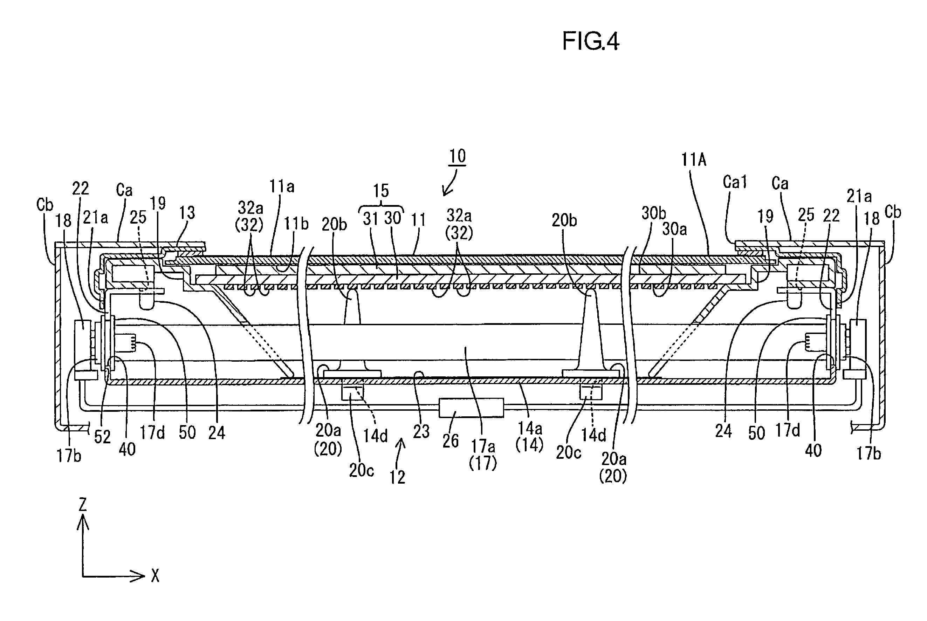

A first embodiment of the present invention is described with reference to Figs. 1 to 8. Firstly, the configuration of a television receiver TV including a liquid crystal display device 10 is described. Fig. 1 is an exploded perspective view showing a schematic configuration of the television receiver TV according to this embodiment; Fig. 2 is an exploded perspective view showing a schematic configuration of the liquid crystal display device included in the television receiver of Fig. 1; Fig. 3 is a cross-sectional view showing a sectional configuration of the liquid crystal display device of Fig. 2, taken along a direction parallel to the short sides thereof; and Fig. 4 is a cross-sectional view showing a sectional configuration of the liquid crystal display device of Fig. 2, taken along a direction parallel to the long sides thereof. Note that this description assumes that the X-axis direction represents a direction parallel to the long sides of the chassis, and that the Y-axis direction represents a direction parallel to the short sides of the chassis.

As shown in Fig. 1, the television receiver TV according to this embodiment is configured by including the liquid crystal display device 10, a power source P, a tuner T and a stand S. The liquid crystal display device 10 (a display device) as a whole has a horizontally-long quadrangular shape (a rectangular shape), and is housed in a stand-up state. As shown in Fig. 2, this liquid crystal display device 10 includes a backlight unit 12 (a lighting device), which is an external light source, and a liquid crystal panel 11 (a display panel). The liquid crystal display device 10 is configured such that these components are integrally supported via a frame-like bezel 13 and the like. The liquid crystal panel 11 provides display by using light from the backlight unit 12. Additionally, the liquid crystal display device 10 is provided with two front and back cabinets Ca and Cb (housing members) configured to house both of the liquid crystal panel 11 and the backlight unit 12 by sandwiching these components from the front and the back. The cabinet Ca (a frame-like section) has an opening Ca1 through which to expose a display surface 11A of the liquid crystal panel 11. In other words, the cabinet Ca surrounds the opening Ca1.

Next, the liquid crystal panel 11 and the backlight unit 12, which constitute the liquid crystal display device 10, are described. The liquid crystal panel 11 (a display panel) has a configuration obtained by joining together a pair of glass substrates with a predetermined gap therebetween and enclosing liquid crystal between the two glass substrates. Provided on one of the glass substrates are switching components (e.g. , TFTs) each connected to a source line and a gate line that intersect at right angles, pixel electrodes connected to the switching components, an alignment film, and the like. Provided on the other glass substrate are a color filter, on which color sections each being of R (red), G (green), B (blue) or the like are arranged in a predetermined array, a counter electrode, an alignment film, and the like. Note that, as shown in FIG. 3, polarizing plates 11a and 11b are arranged on the outer sides of the two substrates.

As shown in Fig. 2, the backlight unit 12 includes: a chassis 14, which has an opening 14b in one side thereof having a light exiting surface (one side thereof facing the liquid crystal panel 11) and has a substantially boxlike shape; a group of optical members 15 (a diffuser plate 30, and a plurality of optical sheets 31 arranged between the diffuser plate 30 and the liquid crystal panel 11) arranged in a manner covering the opening 14b of the chassis 14; and frames 16 each arranged along a corresponding one of the long sides of the chassis 14, and supporting a long-side edge section of the diffuser plate 30 with the long-side edge section sandwiched between the chassis 14 and the frame 16.

In the inside of the chassis 14, a hot cathode tube 17 (a discharge tube), which is a light source, and holders 19, which cover end sections of the hot cathode tube 17, are housed. As shown in FIGS. 3 and 4, in the central part of the inside of the chassis 14 in a direction parallel to the short sides thereof, the hot cathode tube 17 is arranged, as only one hot cathode tube, with the length direction (the axial direction) thereof agreeing with a direction parallel to the long sides of the chassis 14. While the hot cathode tube 17 is attached to the chassis 14 via heat dissipation members 50, opposite ends (parts of ferrules 17b) of the hot cathode tube 17 project and are exposed to the outside of the chassis 14 as shown in FIG. 4. This configuration is described in detail below. Further, in the inside of the chassis 14, support pins 20 to support the optical members 15 from the back side (one side facing the hot cathode tube 17) thereof are provided. Note that, in the backlight unit 12, one side from the hot cathode tube 17 that faces the optical members 15 is the light exiting side.

The chassis 14 is made of metal. As shown in Figs. 3 and 4, the chassis 14 is composed of: a bottom panel 14a having a rectangular shape in a plan view; and folded outer marginal sections 21a and 21b standing up from the respective sides of the bottom panel 14a. Sheet-metal forming process is used in forming the chassis 14 into a shallow, substantially boxlike shape opening toward the front (in one side facing the light exiting face) . Each of the folded outer marginal sections 21a is folded inward and extends in the direction parallel to the short sides. Each of the folded outer marginal sections 21b is folded substantially into a U shape and extends in the direction parallel to the long sides. As shown in Fig. 3, fixing holes 14c are formed in the upper surfaces of the folded outer marginal sections 21b by drilling, which makes it possible to integrate the bezel 13, the frames 16, the chassis 14 and the like by means of, for example, screws or the like.

Each of the holders 19 covering the end sections of the hot cathode tube 17 is made of synthetic resin, the appearance of which is white, and, as shown in Fig. 2, has a long and narrow, substantially boxlike shape extending in the direction parallel to the short sides of the chassis 14. As shown in Fig. 4, while each of the holders 19 has, on the front face, a stepped surface by which the optical members 15 or the liquid crystal panel 11 may be placed on different steps, the holders 19 are arranged in a state partially overlapping with the folded outer marginal sections 21a extending in the direction parallel to the short sides of the chassis 14. The holders 19 thereby constitute, together with the folded outer marginal sections 21a, sidewalls of the backlight unit 12. Insertion pins 24 are provided on and project from surfaces of the holders 19 that face the folded outer marginal sections 21a of the chassis 14, which provides a configuration where the holders 19 are attached to the chassis 14 with the insertion pins 24 inserted into insertion holes 25 formed on the upper surfaces of the folded outer marginal sections 21a of the chassis 14.

A reflection sheet 23 is arranged on an internal surface (on a surface facing the hot cathode tube 17) of the bottom panel 14a of the chassis 14. The reflection sheet 23 is made of synthetic resin, assumes a white color having excellent light reflectance, and is laid down along the internal surface of the bottom panel 14a of the chassis 14 in a manner almost entirely covering the internal surface. As shown in Fig. 3, the long-side edges of the reflection sheet 23 stand up in a manner covering the folded outer marginal sections 21b of the chassis 14 and are set in a state sandwiched between the chassis 14 and the optical members 15. This reflection sheet 23 enables light emitted from the hot cathode tube 17 to be reflected toward the optical members 15.

As shown in Fig. 4, the optical members 15 have a rectangular shape in a plan view similarly to the liquid crystal panel 11 and the chassis 14. The optical members 15 is interposed between the liquid crystal panel 11 and the hot cathode tube 17, and are composed of: the diffusion plate 30 placed in the back side (one side facing the hot cathode tube 17; opposite to the light exiting side) of the optical members 15; and optical sheets 31 arranged in the front side (one side facing the liquid crystal panel 11; the light emitting side) thereof. The diffusion plate 30 has a configuration obtained by dispersing a large number of diffusing particles in a substantially transparent base substrate having a predetermined thickness and made of resin. The diffusion plate 30 has the capability to diffuse light that transmits therethrough, and has a light reflecting capability to reflect light that is emitted from the hot cathode tube 17. The optical sheet 31 has a sheet-like shape having a thickness thinner than that of the diffusion plate 30, and is formed by laminating, in order from the diffusion plate 30, a diffusion sheet, a lens sheet and a reflection type polarizing sheet.

The support pins 20 are configured to support the diffusion plate 30 from the back side, and are made of synthetic resin (for example, made of polycarbonate). The overall appearances of the support pins 20 have a whitish color, such as white, which has excellent light reflectance. As shown in Figs. 2 to 4, each of these support pins 20 is composed of: a main body section 20a forming a plate-like shape following the bottom panel 14a of the chassis 14; a support section 20b projecting frontward (toward the optical member 15) from the main body section 20a; and an engagement section 20c projecting backward (toward the bottom panel 14a of the chassis 14) from the main body section 20a.

The engaging section 20c includes a pair of elastic engagement pieces, and carries the function of holding the support pin 20 with respect to the chassis 14 by being engaged with a hole edge on the back side of an attachment hole 14d after both of the elastic engagement pieces have been inserted through the attachment hole 14d provided in the chassis 14. The support section 20b as a whole has a conical shape, and is set to a length that allows the rounded apex thereof to abut on (or come close to) a surface on the back side of the diffusion plate 30. The support members 20b are thereby enabled to support the diffusion plate 30 from the back side, and minimize bending of the diffusion plate 30 when the diffusion plate 30 bends.

The diffusion plate 30 is formed by dispersedly blending a predetermined amount of diffusing particles that diffuse light into a substantially transparent base substrate made of synthetic resin (for example, made of polystyrene). Thus, the light transmittance and the light reflectance of the diffusion plate 30 as a whole are made substantially uniform. Note that it is preferable to set specific values of the light transmittance and the light reflectance of the base substrate (excluding a light reflecting section 32 to be described later) of the diffusion plate 30 to around 70% and around 30%, respectively. The diffusion plate 30 has a surface (hereinafter referred to as a first surface 30a) facing the hot cathode tube 17, and another surface (hereinafter referred to as a second surface 30b) located on the side opposite to the side having the first surface 30a and facing the liquid crystal panel 11. This description assumes that, out of these surfaces, the first surface 30a is a light entering surface to which the light from the hot cathode tube 17 enters, whereas the second surface 30b is a light exiting surface from which light exits toward the liquid crystal panel 11.

Further, the light reflecting section 32, which forms a dotted pattern assuming a white color, is formed on the first surface 30a constituting the light-entering surface in the diffusion plate 30. The light reflecting section 32 is formed, for example, by arranging a plurality of dots 32a in a zigzag manner (in a zigzag alignment; in a staggered manner), the plurality of dots 32a each having a circular shape in a plan view. The dot pattern constituting the light reflecting section 32 is formed, for example, by being printed on the surface of the diffusion plate 30 with paste containing a metal oxide. Screen printing, ink-jet printing and the like are suitable as means for the printing.

The light reflecting section 32 itself is configured, for example, to have light reflectance of about 75% which is higher than the light reflectance of the in-plane light reflectance of the diffusion plate 30 itself, which is set to about 30%. Here, this embodiment uses, as the light reflectance of each material, the average of light reflectance values within a measurement diameter, which are obtained by use of a LAV (with a measurement diameter ϕ at 25.4 mm) of CM-3700d manufactured by Konica Minolta Corporation. Note that a value for the light reflectance of the light reflecting section 32 itself is set to one obtained by forming the light reflecting section 32 all over one surface of the glass substrate and measuring, based on the above measurement means, the one surface having the light reflecting section 32 formed thereon.

The diffusion plate 30 is configured such that, with the dot pattern (the areas of the respective dots 32a) of the light reflecting section 32 being varied, the light reflectance of the first surface 30a facing the hot cathode tube 17 of the diffusion plate 30 is varied along the direction (the Y-axis direction) parallel to the short sides. That is, the diffusion plate 30 is configured such that, in the first surface 30a, the light reflectance of a part (hereinafter referred to as a light source overlapping section DA) overlapping with the hot cathode tube 17 is higher than the light reflectance of a part (hereinafter referred to as a light source non-overlapping section DN) not overlapping with the hot cathode tube 17. Note that the light reflectance of the first surface 30a of the diffusion plate 30 is made almost invariable and substantially uniform along the direction parallel to the long sides. For the purpose of obtaining the above described distribution in light reflectance, the areas of the respective dots 32a constituting the light reflecting section 32 are determined so that: the areas of the dots 32a in the central part, i.e., a part facing the hot cathode tube 17, of the diffusion plate 30 in a direction parallel to the short sides thereof can be the greatest; the areas of the dots 32a can gradually decrease according to how far the respective dots 32a are from the central part; and the areas of the dots 32a in the most marginal part of the diffusion plate 30 in the direction parallel to the short sides thereof can be the smallest. In other words, the areas of the dots 32a are determined so as to gradually decrease according to how far the respective dots 32a are from the hot cathode tube 17.

The diffusion plate 30 having the above described configuration enables light emitted from the hot cathode tube 17 to: directly enter the first surface 30a of the diffusion plate 30, or indirectly enter the first surface 30a after being reflected by the reflection sheet 23, the holder 19, the support pin 20 and the like; then transmit through the diffusion plate 30; and, thereafter, exit toward the liquid crystal panel 11 through the optical sheets 31. Light directly entering from the hot cathode tube 17 accounts for a large portion of light in the light source overlapping section DA which overlaps with the hot cathode tube 17 in the first surface 30a of the diffusion plate 30 through which light emitted from the hot cathode tube 17 enter, whereby the quantity of light in the light source overlapping section DA is relatively great as compared to that in the light source non-overlapping section DN. Therefore, relatively raising the light reflectance of the light reflecting section 32 in the light source overlapping section DA results in reduction in light that enters the first surface 30a, whereby a large quantity of light is reflected and returned into the inside of the chassis 14.

On the other hand, in the first surface 30a, the light source non-overlapping section DN not overlapping with the hot cathode tube 17 receives a little quantity of light directly from the hot cathode tube 17, and the quantity of light therein is relatively smaller than that in the light source overlapping section DA. Therefore, relatively lowering the light reflectance of the light reflecting section 32 in the light source non-overlapping section DN makes it possible to promote entrance of light into the first surface 30a. At this time, light reflected into the inside of the chassis 14 by the light reflecting section 32 of the light source overlapping section DA is guided to the light source non-overlapping section DN by the reflection sheet 23 and the like (a ray L1 of Fig. 3), which supplements the quantity of light therein. This makes it possible to secure a sufficient quantity of light that enters the light source non-overlapping section DN.

As mentioned above, changing the reflectance of the diffusion plate 30 in the direction parallel to the short sides makes it possible both to obtain a configuration having the hot cathode tube 17 arranged only in the central part in the direction parallel to the short sides and to smoothen the distribution in brightness of illuminating light from the diffusion plate 30 as a whole, and thus makes it possible to achieve a smooth distribution in illumination brightness of the backlight unit 12 as a whole. Note that, as means to condition the light reflectance, another method may be used in which, while the areas of the respective dots 32a of the light reflecting section 32 are set equal to each other, intervals between the dots 32a are varied.

Next, the configuration of the hot cathode tube 17 and a structure for attachment of the hot cathode tube 17 to the chassis 14 are described. As shown in FIGS. 3 and 4, the hot cathode tube 17 as a whole has a tubular shape (a linear shape), and includes a hollow glass tube 17a (a tube section), the pair of ferrules 17b arranged on both end sections of the glass tube 17a, and filaments 17d (electrodes) arranged on both ends of the inside of the glass tube 17a in the axial direction thereof. Note that, in general, the outer diameter size of the hot cathode tube 17 (the glass tube 17a) is large as compared to the outer diameter size (for example, about 4 mm) of the cold cathode tube, and is set to, for example, about 15.5 mm.

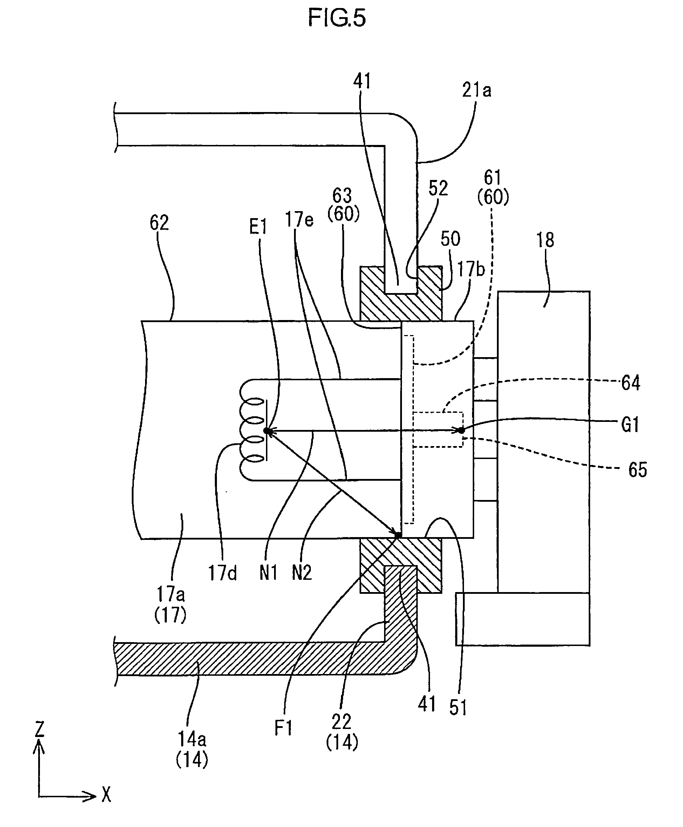

While the glass tube 17a has a substantially cylindrical shape, a fluorescence material is applied to the inner wall surface of the glass tube 17a. Each of end-wall sections 60 on both ends in the axial direction of the glass tube 17a is composed of: a ferrule attachment section 61 configured to enable either of the ferrules 17b to fit in therewith from outside; and a coupling section 63 configured to couple the rim of the ferrule attachment section 61 and a sidewall 62 of the glass tube 17a together. The ferrule attachment section 61 is substantially U-shaped in a sectional view (illustrated by use of a dotted line in FIG. 5), and has a circular shape when viewed from the axial direction. The diameter of the ferrule attachment section 61 is slightly smaller than the diameter of the glass tube 17a. On the other hand, the coupling section 63 has a substantially annular shape when viewed from the axial direction.

The ferrule attachment section 61 has an exhaust pipe 64 formed integrally therewith in a diametrically central portion thereof. The exhaust pipe 64 is provided for the purpose of exhausting air from the inside of the glass tube 17a in manufacturing the glass tube 17a. The exhaust pipe 64 is formed by projecting a part (a part of the end-wall section 60) of the ferrule attachment section 61 so as to be far away from the filament 17d. In other words, the exhaust pipe 64 projects from one end of the glass tube 17a. Additionally, the exhaust pipe 64 is coaxial with the glass tube 17a and the diameter of the exhaust pipe 64 is set smaller than the diameter of the ferrule attachment section 61.

Here, the exhaust pipe 64 will be explained in detail. In manufacturing the glass tube 17a, a vacuum pump (not illustrated), for example, is attached to one end (the outer side) of the exhaust pipe 64, and the vacuum pump is then driven. Air contained inside the glass tube 17a is thereby exhausted through the exhaust pipe 64. After the inside of the glass tube 17a is thus brought into a vacuum state, the inside of the glass tube 17a is filled up with mercury, rare gas and the like through the exhaust pipe 64. Thereafter, one end of the exhaust pipe 64 is fused by a burner or the like to be sealed up (a sealed section is denoted by a reference sign 65) . That is, a projecting portion is formed by sealing up one end of the exhaust pipe 64, and the sealed section 65 is formed as a projecting end of the projecting portion. A state where mercury and rare gas are enclosed inside the glass tube 17a is reached through the above procedure.

While two lead wires 17e penetrate, and are thereby attached to, each of the ferrule attachment sections 61 of the glass tube 17a, the filament 17d is provided as a bridge between these two lead wires 17e. The filament 17d is electrically connected to the ferrule 17b via both of the lead wires 17e. The ferrule 17b is configured to have the same diameter as the glass tube 17a, and is attached to the glass tube 17a in a manner covering the exhaust pipe 64. The exhaust pipe 64 is thereby protected by the ferrule 17b.

The filament 17d is arranged in a diametrically central portion of the glass tube 17a, and the exhaust pipe 64 and the filament 17d are arranged side by side along the X-axis direction. In addition, as shown in FIG. 5, when N1 and N2 represent the linear distance from the filament 17d to the sealed section 65 (the projecting end of the projecting portion) and the greatest linear distance from the filament 17d to the end-wall section 60, respectively, N1 and N2 are determined such that N1 is greater than N2.

Note that the greatest linear distance N2 from the filament 17d to the end-wall section 60 represents a distance that is the greatest of all the linear distances between the filament 17d and the end-wall section 60 (the ferrule attachment section 61 and the coupling section 63) . In this embodiment, the linear distance from a point E1 on the filament 17d to a diametrical end section (a point F1) of the end-wall section 60 corresponds to the greatest linear distance N2. Further, the point E1 on the filament 17d is, for example, a position on the filament 17d that is the nearest from the sealed section 65. Note that the point E1 on the filament 17d may be set to any position that is on the filament 17d. As a result of the above configuration, the sealed section 65 is located at a position that is the farthest of all the positions on the end-wall section 60 and the exhaust pipe 64 (more precisely, the inner surface of the end-wall section 60 and the inner surface of the exhaust pipe 64) from the filament 17d.

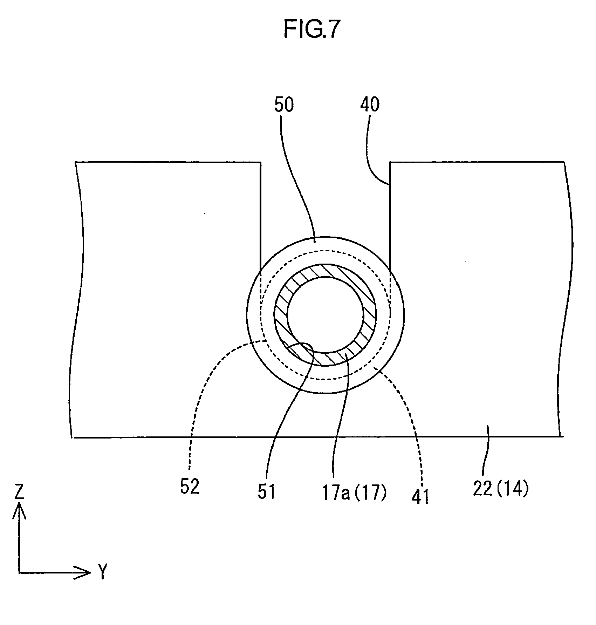

As shown in Fig. 4, a cutout 40 is formed in each of sidewalls 22 (a wall section of the chassis) that constitute the folded outer marginal sections 21a on both sides of the chassis 14 in the longitudinal direction (the X-axis direction) thereof. As shown in Fig. 7, the cutout 40 has a groove-like shape obtained by cutting out a marginal section of the sidewall 22 from the front side (the side facing the light exiting surface, or the upper side in Fig. 7), and penetrates the sidewall 22 in the direction parallel to the long sides. The hot cathode tube 17 is configured to be attachable to the cutouts 40 via the respective heat dissipation members 50 with the cutouts 40 penetrated by the hot cathode tube 17. That is, the cutouts 40 are provided as tube attachment sections. Parts of both of the ferrules 17b of the hot cathode tube 17 project and are exposed to the outside of the chassis 14 through the cutouts 40. This results in the above described configuration where the sealed sections 65 of the exhaust pipes 64 are arranged outside the chassis 14. Note that, as shown in FIG. 4, both of the ferrules 17b and the sealed sections 65 are protected by being housed inside the two front and back cabinets Ca and Cb (arranged toward the inner side of the housing members) .

Each of the heat dissipation members 50 is configured to enable heat dissipation from the hot cathode tube 17 toward the chassis 14 by being arranged between a corresponding one of the cutouts 40 and the hot cathode tube 17. The heat dissipation member 50 is made of, for example, silicone rubber, and provides high insulation property. As shown in FIG. 7, the heat dissipation member 50 has an annular shape having a tube insertion hole 51 formed inside, and is elastically deformable in the diametrical direction thereof. The inner diameter of the tube insertion hole 51 is set substantially equal to or slightly smaller than the outer diameter of the glass tube 17a, and the glass tube 17a can be inserted through the tube insertion hole 51 in the axial direction of the glass tube 17a. As shown in FIG. 5, this embodiment has a configuration where, with the glass tube 17a inserted through this tube insertion holes 51, the inner circumferential surface of each of the heat dissipation members 50 is in contact with both of the outer circumferential surface of the glass tube 17a and the outer circumferential surface of a corresponding one of the ferrules 17b.

Note that, in the above configuration, when the glass tube 17a is inserted into the tube insertion hole 51 in a case where the inner diameter of the tube insertion hole 51 is set slightly smaller than the outer diameter of the glass tube 17a, the tube insertion hole 51 elastically deforms in a direction such that the diameter thereof is enlarged. This makes it possible to further tighten contact between the outer circumferential surface of the glass tube 17a and the inner circumferential surface of the heat dissipation member 50, and to further facilitate heat dissipation from the glass tube 17a to the heat dissipation member 50.

The outer diameter A2 of the heat dissipation member 50 is set greater than a width A1 of the cutout 40 in the Y-axis direction, and a fitting groove 52 extending all over the circumference of the heat dissipation member 50 is concavely provided on the outward surface (the circumferential surface) thereof in the diametrical direction thereof. A groove width of the fitting groove 52 is set slightly smaller than (or substantially equal to) the thickness of the sidewall 22, and the fitting groove 52 is enabled to fit in with an edge 41 of the cutout 40. Both of the ferrules 17b project to and are exposed to the outside of the chassis 14, and the heat dissipation members 50 are in contact with both of the chassis 14 (more specifically, the edge 41 of the cutouts 40) and the hot cathode tube 17 (the glass tube 17a).

Sockets 18 are attached to the respective ferrules 17b of the hot cathode tube 17, and the filaments 17d are electrically connected via the sockets 18 to an inverter board 26 (a power source) attached to the outward surface (the back side) of the bottom panel 14a of the chassis 14. That is, each of the ferrules 17b electrically connects a corresponding one of the filaments 17d and the inverter board 26 to each other. Driving power is supplied to the hot cathode tube 17 from the inverter board 26 and the inverter board 26 controls a tube current value, namely, brightness (the lighting state).

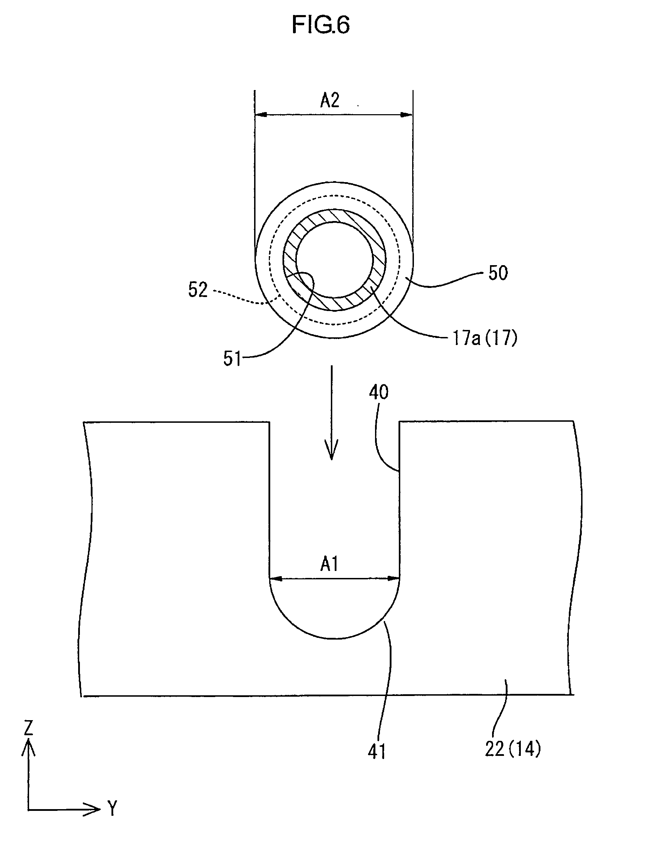

Next, a procedure for attachment of the hot cathode tube 17 to the chassis 14 is described. First of all, the respective heat dissipation members 50 are attached to both ends of the hot cathode tube 17. Specifically, the hot cathode tube 17 is inserted into the tube insertion holes 51 of the respective heat dissipation members 50, whereby each of the heat dissipation members 50 is attached to a position, on the outer circumferential surface of the glass tube 17a, between corresponding ones of the filaments 17d and the ferrules 17b. Consequently, the outer circumferential surface of the hot cathode tube 17 and the inner circumferential surface of each of the heat dissipation members 50 are in contact with each other. Then, as shown in FIG. 6, the respective heat dissipation members 50 are inserted from the front side (the open side of the chassis 14) into the corresponding cutouts 40, and the fitting grooves 52 of the respective heat dissipation members 50 are fit in with the edges 41 of the cutouts 40. Consequently, the glass tube 17a is attached to both of the cutouts 40 via both of the heat dissipation members 50, as shown in FIG. 4.

Next, the operation and effect obtained when the hot cathode tube 17 is lit on in the backlight unit 12 of this embodiment are described. First of all, when driving power is supplied from the inverter board 26 to the hot cathode tube 17, electricity is discharged from the filaments 17d of the hot cathode tube 17. Consequently, inside the glass tube 17a, electrons collide with mercury enclosed therein, and, as a result, mercury is activated, whereby ultraviolet rays are radiated. These ultraviolet rays activate the fluorescence material applied to the inner wall surface of the glass tube 17a, whereby visible light is emitted.

As mentioned above, if the hot cathode tube 17 is lit on, temperatures inside and around the glass tube 17a rise due to heat generation (particularly, heat generation from the filaments 17d) at the time of current passage. In this embodiment, the sealed section 65 of the exhaust pipe 64 formed in the glass tube 17a is arranged outside the chassis 14. Therefore, this embodiment facilitates heat dissipation from the sealed section 65 more effectively as compared to a configuration having the sealed section 65 arranged inside the chassis 14 that tends to retain heat therein. As a result, a temperature of the sealed section 65 is less likely to rise.

Further, the sealed section 65 of the exhaust pipe 64 is located such that a distance between the sealed section 65 and the filament 17d that is a light source is longer than a distance between every portion of the end-wall section 60 and the filament 17d. Therefore, when the filament 17d produces heat while the hot cathode tube 17 is lit on, heat is least likely to be transferred to the sealed section 65 among every portion of the end-wall section 60 and the exhaust pipe 64. Based on the above, the sealed section 65 (more precisely, the inner surface of the sealed section 65) of the exhaust pipe 64 is found as the coldest spot (that has the lowest temperature in the glass tube 17a; a point G1), and a temperature of the coldest spot is less likely to rise.

The temperature of the coldest spot influences a vapor pressure of mercury enclosed in the glass tube 17a, and, by extension, influences the brightness of the hot cathode tube 17. Specifically, as the vapor pressure of mercury rises as the temperature of the coldest spot rises, the amount of ultraviolet rays released from the mercury increases, and the light emission efficiency thereby increases. As the vapor pressure of the mercury rises as the temperature of the coldest spot further rises, the amount of ultraviolet rays released by mercury and then reabsorbed by mercury around the foregoing mercury increases. Then, the amount of ultraviolet rays that hit the fluorescence material decreases, and this decrease impairs the light emission efficiency and decreases the brightness. That is, the hot cathode tube 17 has a characteristic such that, while the brightness thereof is the highest when the temperature of the coldest spot is a certain temperature (appropriate temperature), the brightness decreases as the temperature of the coldest spot becomes either higher or lower than this appropriate temperature. According to this embodiment, prevention of heating up of the coldest spot inside the glass tube 17a makes it possible to prevent the coldest spot from being brought above the appropriate temperature and also to prevent resulting decrease in brightness.

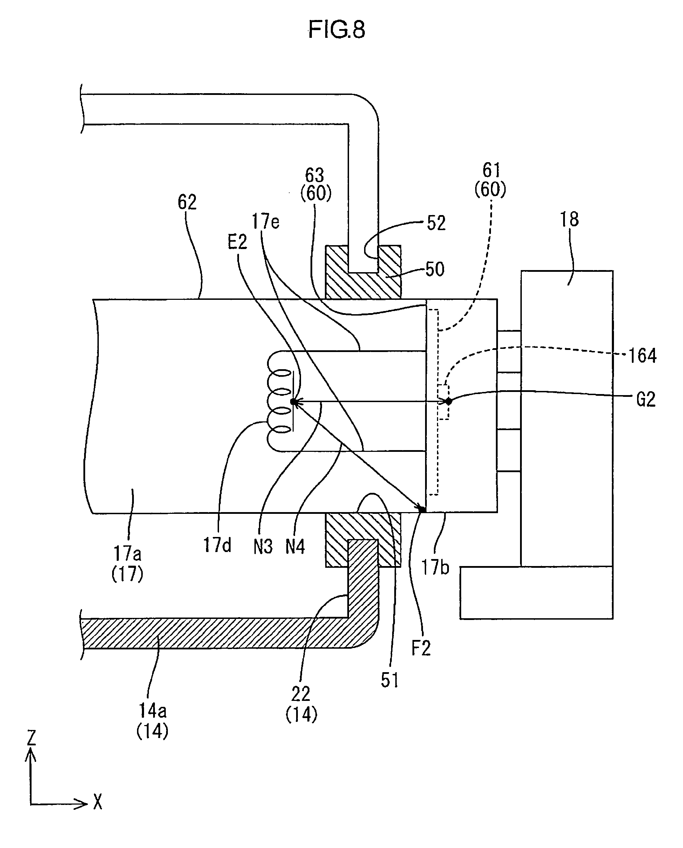

In this embodiment, the sealed sections 65 of the exhaust pipes 64 are found as the coldest spots, as described above. That is, only the sealed sections 65 are provided outside the chassis 14 and this prevents a temperature of the coldest spot from rising. It is thereby possible to, as compared to a configuration where the coldest spots occur at any other portions inside the glass tube 17a, reduce a projecting amount by which the glass tube 17a projects outside of the chassis 14. This issue is described in detail next with reference to a comparative example shown in FIG. 8.

In the glass tube 17a shown in the comparative example in FIG. 8, a length by which an exhaust pipe 164 projects is set shorter than a length by which the exhaust pipe 64 of this embodiment projects. Further, a linear distance N4 (a distance from a point E2 on the filament 17d to a diametrical end section F2 of the end-wall section 60) is greater than a linear distance N3 (a distance from the point E2 on the filament 17d to a sealed section G2 (a projecting end) of the exhaust pipe 164) . Therefore, a position on the end-wall section 60 and the exhaust pipe 64 of the glass tube 17a that is the farthest from the filament 17d is found on the diametrical end section (the point F2) of the end-wall section 60. Therefore, with the configuration shown in FIG. 8, there may be a case where the coldest spot occurs at the point F2. In a case where the coldest spot occurs at the point F2, the point F2 is necessarily provided outside the chassis 14 to prevent a temperature of the coldest spot from rising. Further, with a configuration where the point F2 is arranged outside the chassis 14, a longer portion of the end section of the glass tube 17a is required to project to the outside of the chassis 14 compared to a case with the configuration of this embodiment.

In this respect, this embodiment only requires that only the sealed section 65 be arranged outside the chassis 14. Based on the above, this embodiment makes it possible to prevent decrease in brightness of the hot cathode tube 17 that is attributable to heating up of the coldest spots. Not only that, by setting the coldest spot at the projecting end (the sealed section 65) of the exhaust pipe 64, this embodiment makes it possible to reduce a projecting amount by which the glass tube 17a projects to outside of the chassis 14, and to reduce the width (the longitudinal width in this embodiment) of the backlight unit 12.

Further, the glass tube 17a includes the exhaust pipe 64 projecting from one end of the glass tube 17a. The exhaust pipe 64 exhausts air from the glass tube 17a in manufacturing the hot cathode tubes 17. The exhaust pipe 64 is formed as a projecting portion by sealing up an end section of the exhaust pipe 64. In a case where the exhaust pipe 64 inevitably formed in the manufacturing process of the glass tube 17a is utilized as a projecting portion, another new projecting portion is not necessarily formed and this reduces the manufacturing cost .

Further, the inverter board 26 is provided to supply driving power to the hot cathode tube 17. The hot cathode tube 17 has the ferrules 17b each having the function of electrically connecting a corresponding one of the filaments 17d and the inverter board 26, and the ferrules 17b are attached to the glass tube 17a so as to cover the sealed sections 65. This configuration enables heat dissipation from the sealed sections 65 to the ferrules 17b, and makes it possible to prevent a temperature of the sealed sections 65 (the coldest spots) from rising during lighting of the hot cathode tube 17.

Further, the chassis 14 has the cutouts 40 penetrating the sidewalls 22 of the chassis 14, and the cutouts 40 are provided as tube attachment sections to which the glass tube 17a is attached with the glass tube 17a penetrating through the cutouts 40. The attachment of the glass tube 17a to the cutouts 40 enables the sealed sections 65 of the exhaust pipes 64 to be provided outside the chassis 14.

Further, the heat dissipation member 50is provided between each of the cutouts 40 and the glass tube 17a. The heat dissipation member 50 dissipates heat from the glass tube 17a to the chassis 14. With this configuration, heat that is produced while the hot cathode tube 17 is lit on is dissipated to the chassis 14 via the heat dissipation members 50. This prevents a temperature of the sealed sections 65 (the coldest spots) in the exhaust pipes 64 from rising.

Further, the hot cathode tube 17 is used as a discharge tube. This achieves improved brightness.

### <Second embodiment>

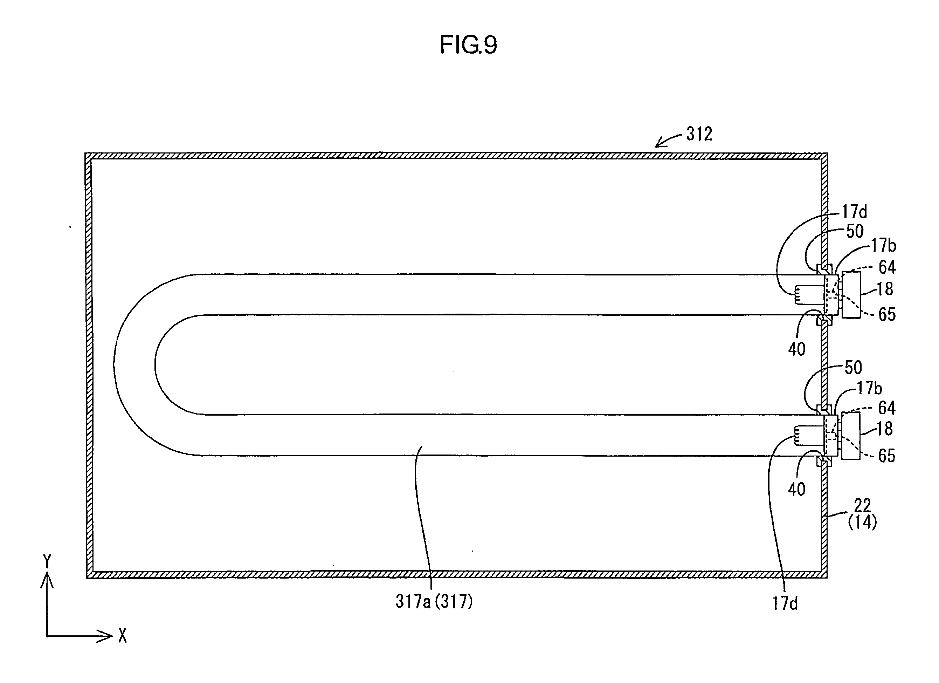

A second embodiment of the present invention is described with reference to Fig. 9. In a backlight unit 312 of this embodiment, the shape of a hot cathode tube is different from those of the above respective embodiments. Parts identical to those of the above embodiments are denoted by the same reference signs, and redundant description is not repeated here. The hot cathode tube 317 in this embodiment is a U-shaped tube. That is, the glass tube 317a (a tube section) is U-shaped in a plan view (in a view from the front side of the chassis 14).

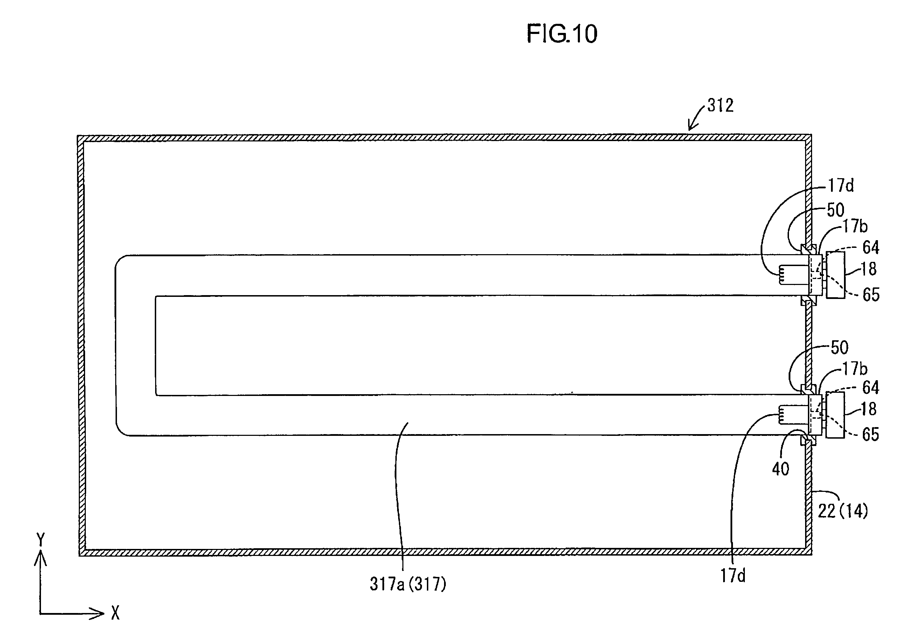

The sidewall 22 on one side (the right side of FIG. 9) of the chassis 14, out of the sidewalls 22 on both sides in the X-axis direction thereof, has the cutouts 40 formed in a manner corresponding to both ends of the hot cathode tube 317. Each of the end sections of the glass tube 317a is attached to a corresponding one of the cutouts 40 with the elastic member 50 therebetween. Both of the sealed sections 65 of both of the exhaust pipes 64 are thereby arranged outside the chassis 14 by projecting to the outside thereof. The operation and effect obtained by arranging the sealed sections 65 outside the chassis 14 are similar to those in the first embodiment described above, and description thereof is not repeated here. Note that, as shown in Fig. 10, the shape of the glass tube 317a may have a U shape with corners in straight angle. With the hot cathode tube 317 being U-shaped (or U-shaped with corners in straight angle), it is possible to set, only on one end of the chassis 14, positions at which the glass tube 317a is attached to the chassis 14, whereby workability is improved.

### <Third embodiment>

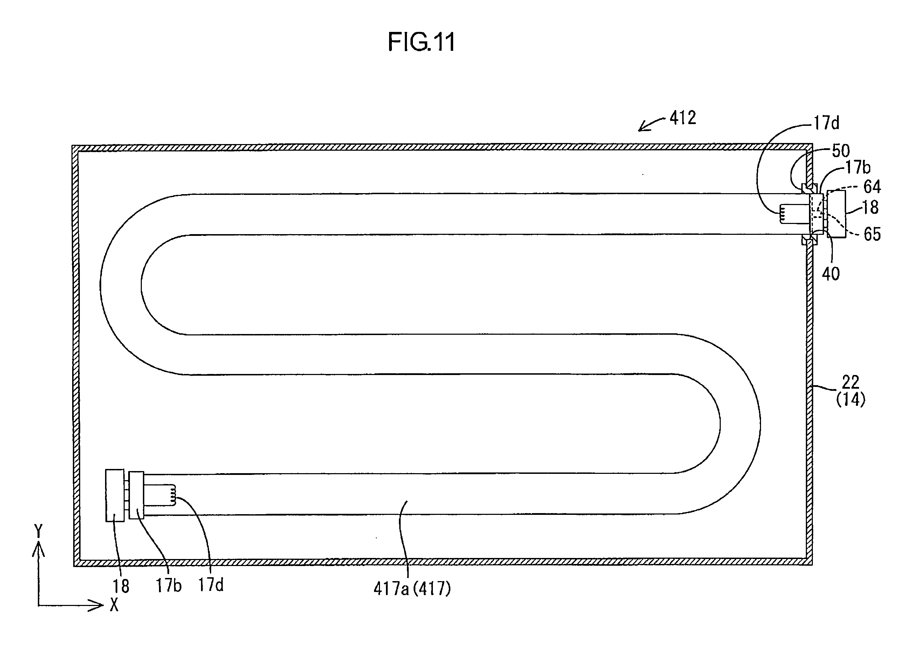

A third embodiment of the present invention is described with reference to Fig. 11. In a backlight unit 412 of this embodiment, the shape of a hot cathode tube is different from those of the above respective embodiments. Parts identical to those of the above embodiments are denoted by the same reference signs, and redundant description is not repeated here. The hot cathode tube 417 in this embodiment is a sigmoid tube, and the shape of a glass tube 417a has a sigmoid shape (a meandering shape) in a plan view (in a view from the front side of the chassis 14).

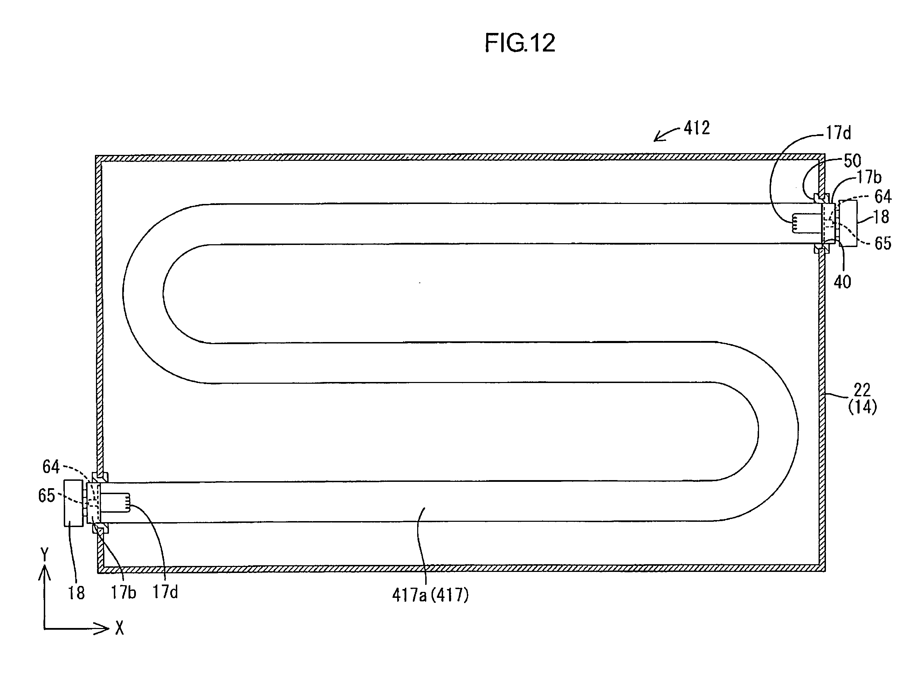

In the sidewall 22 on one side (e.g., the right side of Fig. 11) of the chassis 14, which is one of the sidewalls 22 on both sides in the X-axis direction thereof, the cutout 40 is formed corresponding to one end of the hot cathode tube 417. The end section of the glass tube 417a is attached to the cutout 40 via the elastic member 50. The sealed section 65 of the exhaust pipe 64 of the hot cathode tube 417 is thereby arranged outside the chassis 14 by projecting to the outside thereof. The operation and effect obtained by arranging the sealed section 65 outside the chassis 14 are similar to those in each of the above described embodiments, and description thereof is not repeated here. Note that the shape of the glass tube 417a is not limited to a sigmoid shape, and may be any shape as long as the shape is a meandering shape. Additionally, as shown in FIG. 12, the configuration may be such that the respective sealed sections 65 at both ends of the hot cathode tube 417 are arranged outside the chassis 14 by projecting to the outside thereof. As compared to a case where the glass tube 417a has a straight shape, the glass tube 417a thus configured to have a meandering shape makes it possible to enlarge, by using only the single hot cathode tube 417, an area (a light emitting area), within the inner surface of the chassis 14 on which the hot cathode tube 417 is arranged.

### <Fourth embodiment>

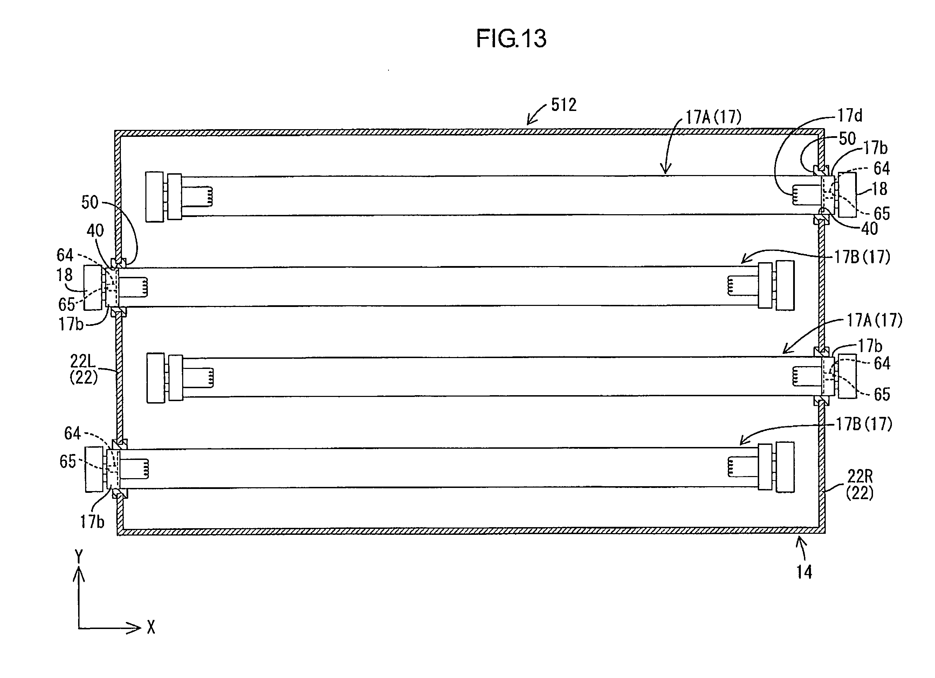

A fourth embodiment of the present invention is described with reference to Fig. 13. Parts identical to those of the above embodiments are denoted by the same reference signs, and redundant description is not repeated here. In the chassis 14 of a backlight unit 512 of this embodiment, the plurality of (e.g., four) hot cathode tubes 17 is arranged in parallel with each other in the Y-axis direction. The respective hot cathode tubes 17 are arranged in parallel to one another with the axial directions thereof agreeing with the X-axis direction. In this embodiment, directions toward which the sealed sections 65 project are various among the hot cathode tubes 17.

Specifically, the first and third hot cathode tubes 17 (first discharge tubes denoted by a reference sign 17A) downward from the top in FIG. 13 are arranged outside the chassis 14 in a manner such that the sealed sections 65 project on one end (the right side in FIG. 13) of the chassis 14 in the direction (the X-axis direction; the width direction) parallel to the long sides thereof. That is, in the hot cathode tubes 17A, the sealed sections 65 at the one end project from the right sidewall 22 (denoted by a reference sign 22R).

On the other hand, the second and fourth hot cathode tubes 17 (denoted by a reference sign 17B, second discharge tubes) downward from the top in FIG. 13 are arranged outside the chassis 14 in a manner such that the sealed sections 65 project on the other end (the left side in FIG. 13) of the chassis 14 in the direction (the X-axis direction) parallel to the long sides thereof. That is, in the hot cathode tubes 17B, the sealed sections 65 at the other end project from the left sidewall 22 (denoted by a reference sign 22R). In this embodiment, the hot cathode tubes 17A and the hot cathode tubes 17B are arranged alternately in the Y-axis direction. Note that a direction along which the hot cathode tubes 17 are arranged in parallel with each other is not limited to the Y-axis direction, and the hot cathode tubes 17 may be arranged in parallel with each other, for example, in the X-axis direction. In a case where the hot cathode tubes 17 are arranged in parallel with each other in the X-axis direction, it is only required that the above mentioned width direction of the chassis 14 be changed to, for example, the direction parallel to the short sides (the Y-axis direction) of the chassis 14.

### <Fifth embodiment>

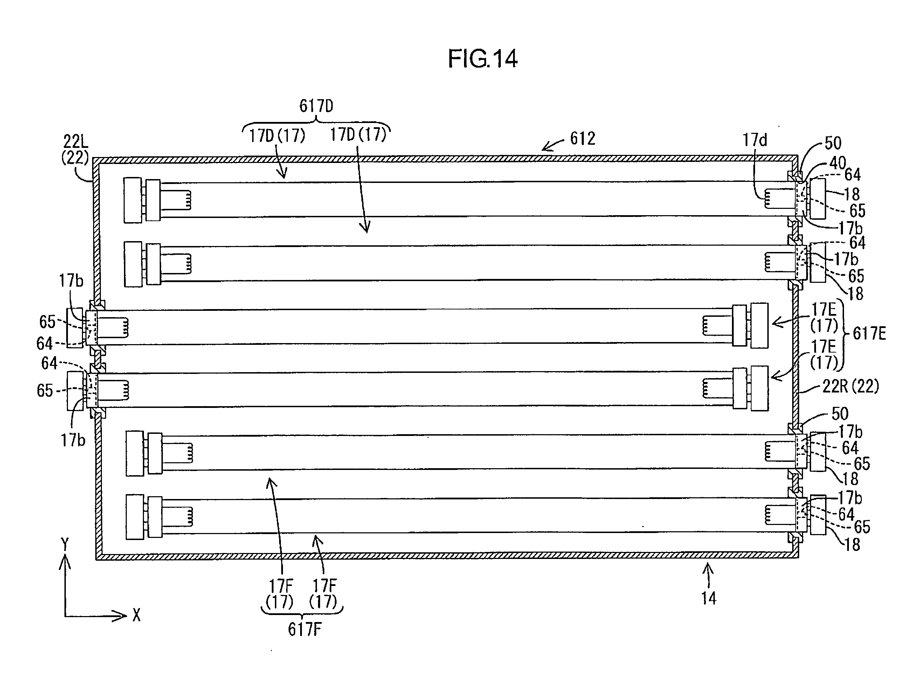

A fifth embodiment of the present invention is described with reference to Fig. 14. Parts identical to those of the above embodiments are denoted by the same reference signs, and redundant description is not repeated here. In the chassis 14 of a backlight unit 612 of this embodiment, the plurality of (e.g., six) hot cathode tubes 17 is arranged in parallel with each other in the Y-axis direction. The respective hot cathode tubes 17 are arranged in parallel to one another with the axial directions thereof agreeing with the X-axis direction. Additionally, directions toward which the sealed sections 65 project are various among groups (discharge tube groups) of the hot cathode tubes 17 that are next to one another.

Specifically, when a group of the first and second hot cathode tubes 17 downward from the top, a group of the third and the fourth hot cathode tubes 17 downward from the top, and a group of the fifth and sixth hot cathode tubes 17 downward from the top, in FIG. 14, are defined as a discharge tube group 617D (a first discharge tube group), a discharge tube group 617E (a second discharge tube group), and a discharge tube group 617F (another first discharge tube group), respectively, the sealed sections 65 of the respective hot cathode tubes 17 (denoted by reference signs 17D and 17F) in the discharge tube group 617D and the discharge tube group 617F are arranged outside the chassis 14 in a manner projecting on one end (the right side in FIG. 14) of the chassis 14 in the direction parallel to the long sides (the width direction) thereof.

On the other hand, the sealed sections 65 of the respective hot cathode tubes 17 (denoted by a reference sign 17E) in the discharge tube group 617E are arranged outside the chassis 14 in a manner projecting on the other end (the left side in FIG. 14) of the chassis 14 in the direction parallel to the long sides (the width direction) thereof. Additionally, the first discharge tube groups and the second discharge tube group are arranged alternately in the Y-axis direction. Note that any group of two or more hot cathode tubes 17 that are next to one another is applicable as each of the above described discharge tube groups, which means that the number of the hot cathode tubes 17 constituting each of the discharge tube groups may be changed as appropriate.

### <Sixth embodiment>

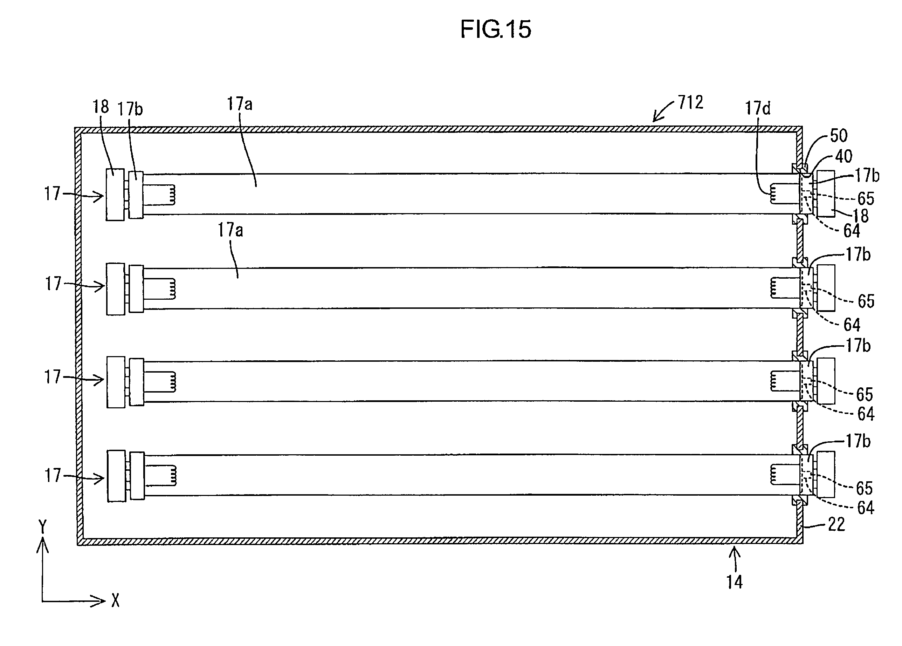

A sixth embodiment of the present invention is described with reference to Fig. 15. Parts identical to those of the above embodiments are denoted by the same reference signs, and redundant description is not repeated here. In the chassis 14 of a backlight unit 712 of this embodiment, the plurality of (e.g., four) hot cathode tubes 17 is arranged in parallel with each other in the Y-axis direction. The hot cathode tubes 17 are arranged in parallel to one another with the axial directions thereof agreeing with the X-axis. The sealed sections 65 of the respective hot cathode tubes 17 are exposed to the outside of the chassis 14 in a manner projecting on one end of the chassis 14 (the right side in FIG. 15) in the direction parallel to the long sides (the width direction) thereof. In other words, the sealed sections 65 arranged outside the chassis 14 are unevenly distributed on one end of the chassis 14.

### <Seventh embodiment>

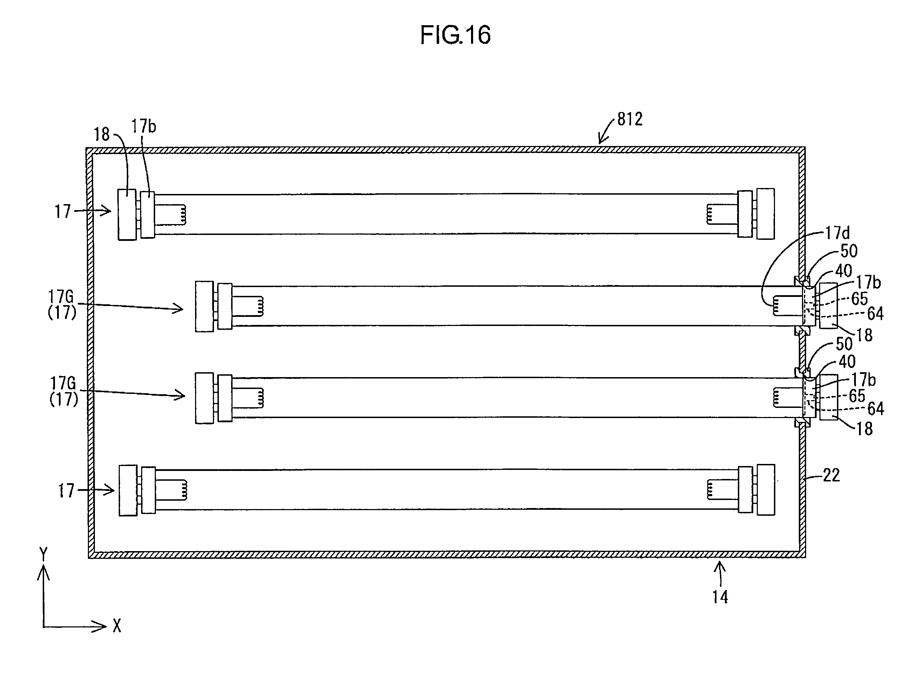

A seventh embodiment of the present invention will be described with reference to Fig. 16. Parts identical to those of the above embodiments are denoted by the same reference signs, and redundant description is not repeated here. In a backlight unit 812 of this embodiment, the plurality of (e.g., four) hot cathode tubes 17 is arranged in parallel with each other in the chassis 14. The hot cathode tubes 17 are arranged in parallel to one another with the axial directions thereof agreeing with the X-axis. In this embodiment, only the sealed sections 65 of the hot cathode tubes 17 (denoted by a reference sign 17G) that are arranged in the central part of the direction of arranging the hot cathode tubes 17 (the Y-axis direction) are arranged outside the chassis 14. In a case where the plurality of hot cathode tubes 17 is arranged in parallel with each other, the central part in the direction along which the hot cathode tubes 17 are arranged in parallel with each other tends to have a relatively higher temperature than the other parts inside the chassis 14. Therefore, it is particularly effective to prevent heating up of the coldest spots by exposing the sealed sections 65 of only the hot cathode tubes 17G arranged in the central part.

Note that a condition where some of the hot cathode tubes 17 are arranged in the middle portion of the chassis 14 in a direction (e.g., the Y-axis direction) along which the hot cathode tubes 17 are arranged in parallel with each other implies a condition where another hot cathode tubes 17 are arranged on the respective sides (the upper and lower sides in Fig. 16) of the hot cathode tubes 17G. Additionally, the number of the hot cathode tubes 17G arranged in the middle portion may be changed as appropriate.

### <Eighth embodiment>

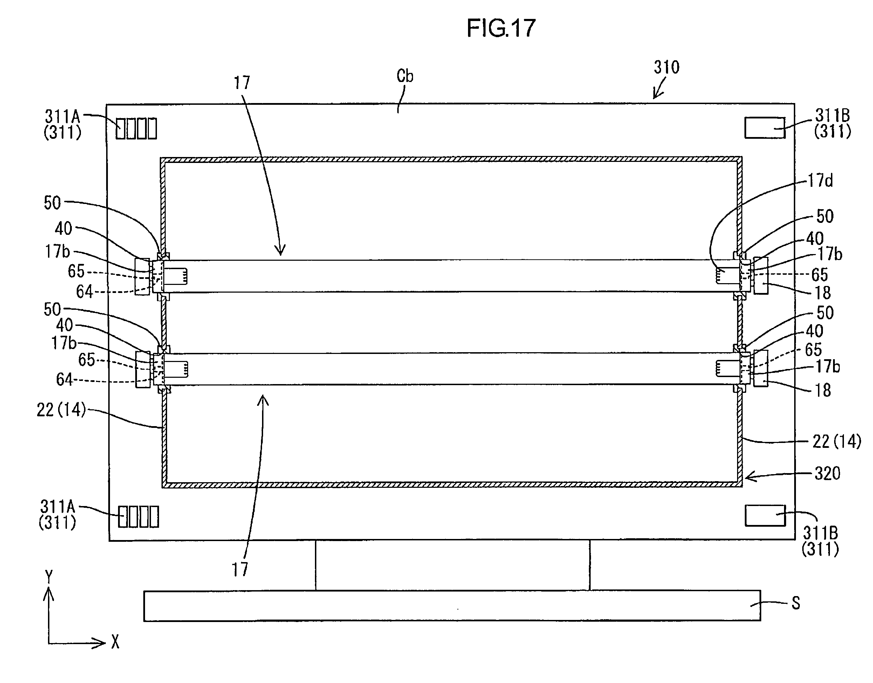

An eighth embodiment of the present invention is described with reference to Fig. 17. Parts identical to those of the above embodiments are denoted by the same reference signs, and redundant description is not repeated here. In a liquid crystal display device 310 of this embodiment, ventilation openings 311 (a cooling mechanism) are formed in the four corners of the rectangular cabinet Cb at the back by penetrating the cabinet Cb in the frontward-backward direction. For example, a slit shape (ventilation openings 311A in the left side) and a rectangular shape (ventilation openings 311B in the right side) can be presented as examples of the shape of each of the ventilation openings 311. Further, in a backlight unit 320 of this embodiment, the chassis 14 includes, for example, the two hot cathode tubes 17, and both of the sealed sections 65 of each of the hot cathode tubes 17 are arranged outside the chassis 14 by projecting to the outside thereof.

Both of the ventilation openings 311A in the left side in FIG. 17 are aligned along the Y-axis direction, and arranged so as to line up substantially in alignment with the sealed sections 65 in the left sides that project from a chassis 22. Both of the ventilation openings 311B in the right side are aligned along the Y-axis direction, and arranged so as to line up substantially in alignment with the sealed sections 65 in the right side that project from the chassis 22.

According to the above configuration, when the hot cathode tubes 17 are lit on, air inside the front and back cabinets Ca and Cb is exhausted from the respective ventilation openings 311. This prevents accumulation of heat inside the cabinets Ca and Cb. Heat dissipation from the sealed sections 65 can be thereby further facilitated. In other words, the ventilation openings 311 constitute a cooling mechanism configured to enable cooling of the sealed sections 65.

Further, arranging both of the ventilation openings 311A in alignment with the sealed sections 65 makes it more likely that airflows occur around sealed sections 65 in the insides of the cabinets Ca and Cb. Specifically, for example, air having flown into the insides of the cabinets Ca and Cb from the ventilation opening 311A in the lower side is exhausted from the ventilation opening 311A in the upper side after passing through areas surrounding the ferrules 17b (the sealed sections 65) in the left side. This further facilitates heat dissipation from the sealed sections 65, and more effectively prevents a temperature of the coldest spots from rising. The ventilation openings 311 and ferrules 17b in the right side exhibit the same operation and effect as those in the left side. Note that the number of the ventilation openings 311 and a position at which to form each of the ventilation openings 311 are not limited by the configuration of this embodiment, and may be changed as appropriate. Alternatively, the ventilation openings 311 may be composed only of the slit-like ventilation openings 311A, or may be composed only of the ventilation openings 311B having rectangular shapes. The shape of each of the respective ventilation openings 311 is not limited to one mentioned in this embodiment, and may be another shape (e.g., a circular shape).

### <Ninth embodiment>

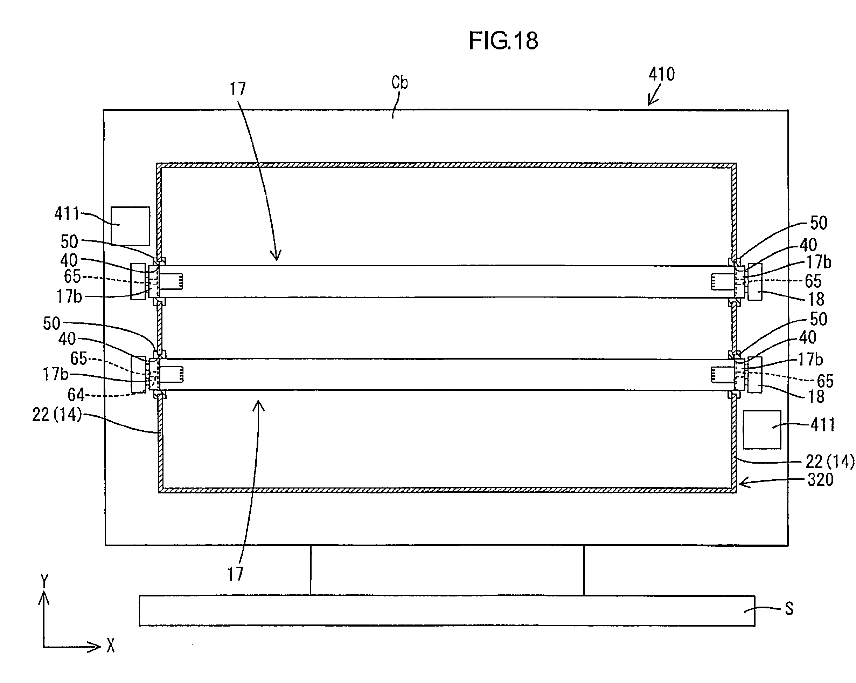

A ninth embodiment of the present invention is described with reference to Fig. 18. Parts identical to those of the above embodiments are denoted by the same reference signs, and redundant description is not repeated here. In a liquid crystal display device 410 of this embodiment, cooling fans 411 (a cooling mechanism) for cooling the sealed sections 65 are provided at two positions of the back cabinet Cb. For example, a motor (not illustrated) is connected to each of the cooling fans 411. The configuration is such that air is blown by rotation of the cooling fan 411 when the motor is driven to rotate by receiving power supply from a power source not illustrated. Each of the cooling fans 411 is provided next to one of the sealed sections 65such that air blow from the cooling fan 411 forwards the sealed section 65. With the above configuration, each cooling fan is activated while the hot cathode tubes 17 is lit on, and the sealed sections 65 are cooled more effectively and a temperature of the sealed sections 65 is prevented from rising.

### <Tenth embodiment>

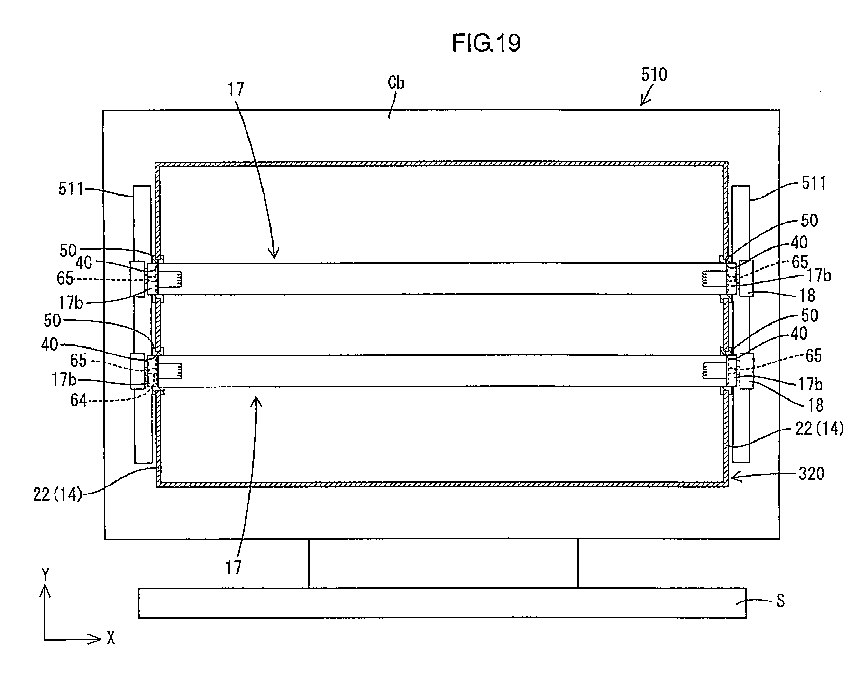

A tenth embodiment of the present invention is described with reference to Fig. 19. Parts identical to those of the above embodiments are denoted by the same reference signs, and redundant description is not repeated here. In a liquid crystal display device 510 of this embodiment, cooling elements 511 (a cooling mechanism) are provided in the back cabinet Cb. For example, Peltier elements are used as the respective cooling elements 511. A power source not illustrated is connected to each of the cooling elements 511. When an electric current is conducted through the cooling element 511, one surface of the cooling elements 511 absorbs heat, and the other surface thereof produces heat. Note that each of the cooling elements 511 is not limited to a Peltier element.

In this embodiment, the respective cooling elements 511 are installed in a manner corresponding to the sealed sections 65 projecting rightward and leftward. More specifically, the heat-absorbing surfaces of the respective cooling elements 511 are in contact with the ferrules 17b, and the heat-producing surfaces thereof are in contact with the cabinet Cb. Consequently, when electric currents are conducted through the cooling elements 511, heat of the sealed sections 65 are absorbed by the cooling elements through the ferrules 17b. The absorbed heat is dissipated to the cabinet Cb from the heat-producing surface. Therefore, heating up of the sealed sections 65 can be prevented.

### <Eleventh embodiment>

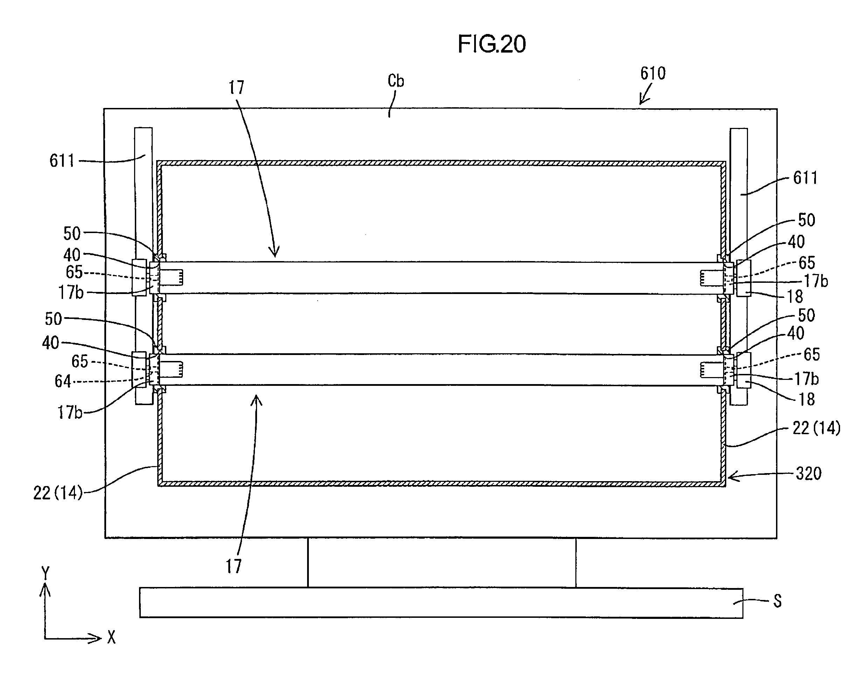

An eleventh embodiment of the present invention is described with reference to Fig. 20. Parts identical to those of the above embodiments are denoted by the same reference signs, and redundant description is not repeated here. In a liquid crystal display device 610 of this embodiment, the back cabinet Cb is provided with heat pipes 611 (a cooling mechanism). For example, each of the heat pipes 611 is configured to function as a heat transfer member having an excellent heat transferring capability, and is composed of a pipe made of copper or a copper alloy. For example, water is contained as a refrigerant in the pipe.

As shown in FIG. 20, the respective heat pipes 611 are installed corresponding to the sealed sections 65 projecting rightward and leftward. One end (the lower end in Fig. 20) of each of the heat pipes 611 is in contact with the ferrules 17b, and the other end (the upper end in Fig. 20) thereof is in contact with the cabinet Cb. Consequently, when heat of the sealed sections 65 reaches the heat pipes 611 through the ferrules 17b, the heat is transferred toward the cabinet Cb through the insides of the heat pipes 611 by means of latent heat involved in evaporation and condensation of water contained in the heat pipes 611. This makes it possible to more effectively prevent a temperature of the sealed sections 65 which are the coldest spots from rising.

### <Twelfth embodiment>

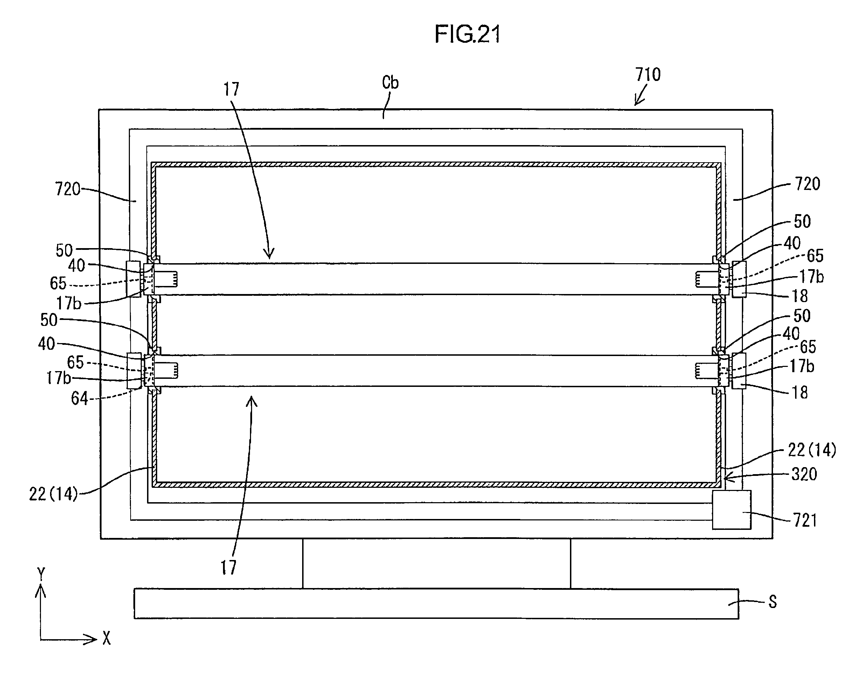

A twelfth embodiment of the present invention is described with reference to Fig. 21. Parts identical to those of the above embodiments are denoted by the same reference signs, and redundant description is not repeated here. A circulation pipe 720, water (a refrigerant) enclosed in the inside of the circulation pipe 720, and a refrigerant circulation pump 721 are included, as cooling mechanism, in a liquid crystal display device 710 of this embodiment. The circulation pipe 720 has a substantially frame-like shape, and is arranged in a manner surrounding the chassis 14. Additionally, a part of the circulation pipe 720 is in contact with (or close to) each of the ferrules 17b. The refrigerant circulation pump 721 is connected to the circulation pipe 720, and connected to a power source not illustrated. This provides a configuration that causes water to circulate within the circulation pipe 720 when the refrigerant circulation pump 721 is driven.

The above configuration causes water, which is a refrigerant, to circulate through the inside of the circulation pipe 720 when the refrigerant circulation pump 721 is driven. Heat of the sealed sections 65 is thereby absorbed by water inside the circulation pipe 720 through the ferrules 17b. The absorbed heat is dissipated, for example, to the cabinet Cb as water circulates. This makes it possible to continually cool the sealed sections 65 by causing water to circulate, whereby heating up of the sealed sections 65 can be prevented. Note that some of the cooling mechanisms given as examples in the sixteenth to twentieth embodiments described above may be used and installed inside the cabinets in combination.

### <Thirteenth embodiment>

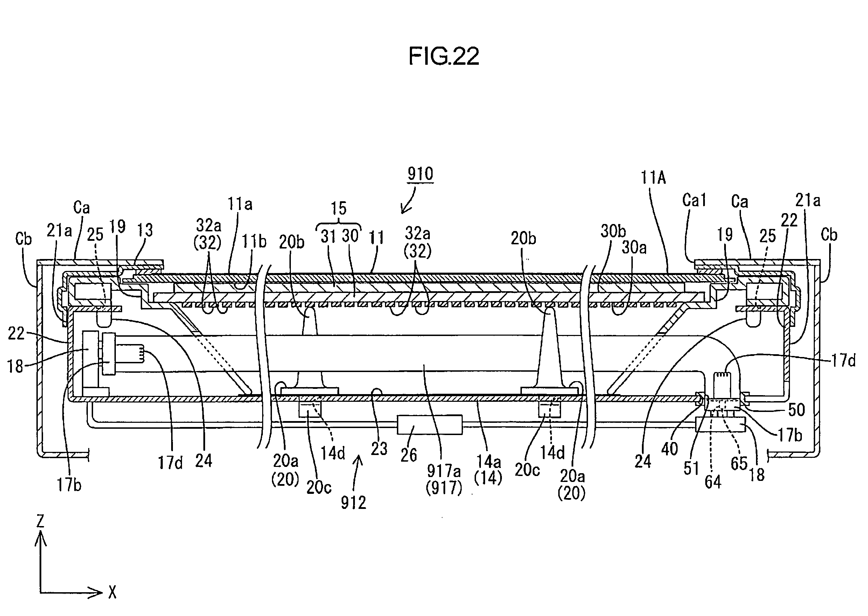

A thirteenth embodiment of the present invention is described with reference to Fig. 22. Parts identical to those of the above embodiments are denoted by the same reference signs, and redundant description is not repeated here. In a backlight unit 912 in a liquid crystal display device 910 of this embodiment, a glass tube 917a of a hot cathode tube 917 is L-shaped. Additionally, in this embodiment, only one end of the hot cathode tube 917 projects to the outside of the chassis. Specifically, the one end of the hot cathode tube 917 projects on the back side of the chassis 14 through a through hole 40 formed in the bottom panel 14a of the chassis 14. The sealed section 65 of the glass tube 917a is thereby arranged outside the chassis 14 in a manner projecting on the back side of the chassis 14. Using a configuration where the sealed section 65 projects on the back side makes it possible to reduce the length of the backlight unit 912 in the width direction thereof as compared to a configuration where the sealed section 65 projects from the sidewall.

### <Fourteenth embodiment>

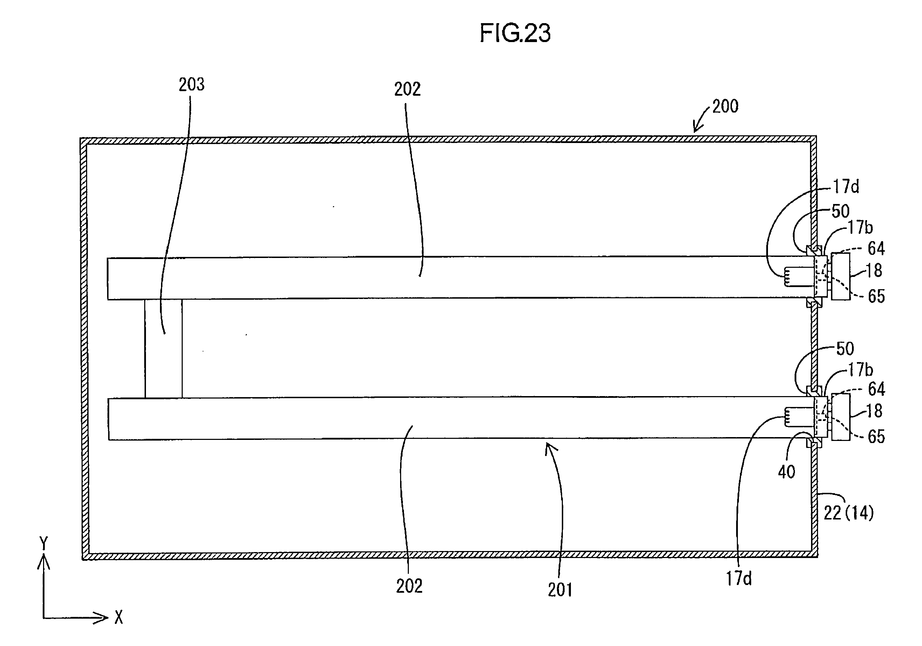

A fourteenth embodiment of the present invention is described with reference to Fig. 23. Parts identical to those of the above embodiments are denoted by the same reference signs, and redundant description is not repeated here. In a backlight unit 200 of this embodiment, a hot cathode tube 201 is formed by joining a plurality of glass tubes (tube sections) together. Specifically, each of the glass tubes in the hot cathode tube 201 is formed by joining glass tube main body sections (tube sections, hereinafter referred to as main body sections 202) and a glass tube joining section (a tube section, hereinafter referred to as a joining section 203) together. Each of the main body sections 202 has a tubular shape and the two main body sections 202 are arranged in parallel to each other with the axial directions thereof matching with the longitudinal direction of the chassis 14. The joining section 203 has a tubular shape, and both end sections thereof are fusion-joined to the respective main body sections 202. Thus, both of the main body sections 202 are coupled together by means of the joining section 203, and the internal space of the joining section 203 communicates with the internal spaces of the respective main body sections 202.

The ferrule 17b is mounted on one end of each of the main body sections 202. Note that a position at which the joining section 203 is joined to each of the main body sections 202 is set relatively close to one side (the other end), of the main body section 202, on which the ferrule 17b is not mounted. Additionally, like each of the above embodiments, this embodiment uses a configuration where, while parts of the ferrules 17b are exposed to the outside of the chassis 14 through the cutouts 40 formed in the chassis 14, the sealed sections 65 of the exhaust pipes 64 are arranged outside the chassis 14. The operation and effect obtained by arranging the sealed sections 65 outside the chassis 14 are the same as those in each of the above embodiments, and description thereof is not repeated here.

### <Fifteenth embodiment>

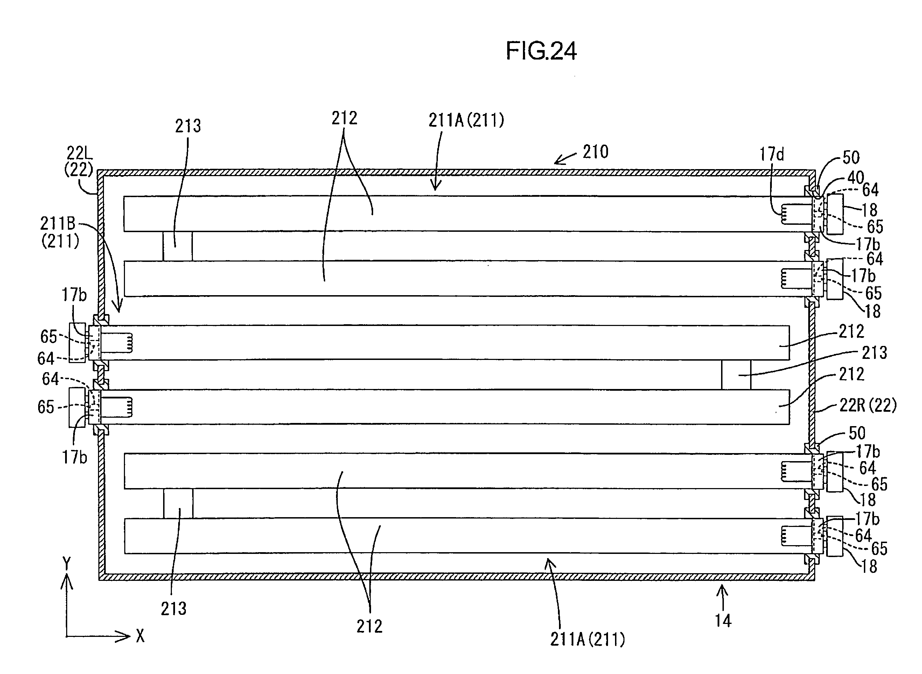

A fifteenth embodiment of the present invention is described with reference to Fig. 24. Parts identical to those of the above embodiments are denoted by the same reference signs, and redundant description is not repeated here. In a backlight unit 210 of this embodiment, a plurality of (e.g., three) hot cathode tubes 211 is arranged in parallel with each other in the Y-axis direction. Each of the hot cathode tubes 211 is configured in the same manner as the hot cathode tube 201 in the fourteenth embodiment described above. The hot cathode tube 211 is formed by joining main body sections 212 and a joining section 213 together, and has the sealed sections 65 arranged outside the chassis 14. The respective hot cathode tubes 211 are arranged with the main body sections 212 thereof being set parallel to one another.

In the first and third hot cathode tubes 211 (first discharge tubes 211A) downward from the top in FIG. 24, the sealed sections 65 are arranged outside the chassis 14 with projecting to the right side (one end) of FIG. 24 in the direction parallel to the long sides (the X-axis direction; the width direction) of the chassis 14.

On the other hand, in the second hot cathode tube 211 (second discharge tube 211B) downward from the top in FIG. 24, the sealed sections 65 are arranged outside of the chassis 14 with projecting to the left side (the other end) of FIG. 24 in the direction parallel to the long sides (the width direction) of the chassis 14. That is, in this embodiment, the hot cathode tubes 211A and the hot cathode tube 211B are arranged alternately in the Y-axis direction.

### <Sixteenth embodiment>

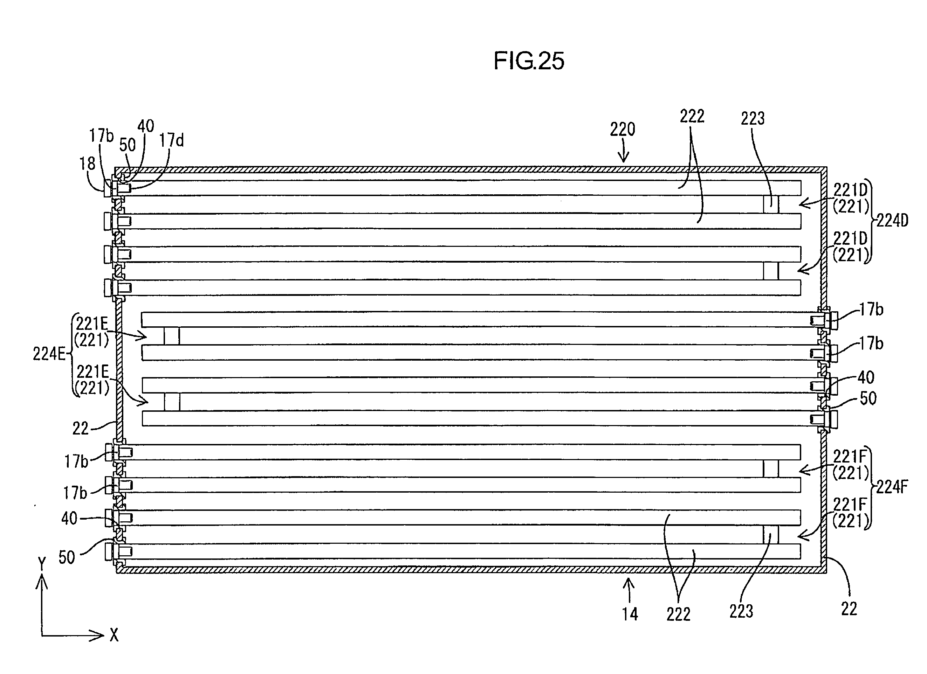

A sixteenth embodiment of the present invention is described with reference to Fig. 25. Parts identical to those of the above embodiments are denoted by the same reference signs, and redundant description is not repeated here. In a backlight unit 220 of this embodiment, a plurality of (e.g., six) hot cathode tubes 221 is arranged in parallel with each other in the Y-axis direction. As in the case of the hot cathode tube 201 in the fourteenth embodiment described above, each of the hot cathode tubes 221 is formed by joining together main body sections 222 and a joining section 223. A part of each ferrule 17b is exposed to the outside of the chassis 14, and the sealed sections (not illustrated) of the exhaust pipes covered by the ferrules 17b are arranged outside the chassis 14. These hot cathode tubes 221 are arranged with the respective main body sections 222 thereof being set parallel to each other.

In this embodiment, the ferrules 17b (as a result, the sealed sections) project in different directions among groups (discharge tube groups) of the hot cathode tubes 221 that are next to one another. Specifically, a group of the first and second hot cathode tubes 221 downward from the top, a group of the third and fourth hot cathode tubes 221 downward from the top, and a group of the fifth and sixth hot cathode tubes 221 downward from the top, in FIG. 25, are defined as a discharge tube group 224D (a first discharge tube group), a discharge tube group 224E (a second discharge tube group), and a discharge tube group 224F (another first discharge tube group), respectively. Parts of the ferrules 17b in the respective hot cathode tubes 221 (221D and 221F) in the discharge tube group 221D and the discharge tube group 221F are exposed to the outside of the chassis 14 with projecting from one end (the left side in FIG. 25) of the chassis 14 in the direction parallel to the long sides (the width direction) thereof.

On the other hand, parts of the ferrules 17b in the hot cathode tubes 221 (221E) in the discharge tube group 224E are exposed to the outside of the chassis 14 with projecting from the other end (the right side in FIG. 25) of the chassis 14 in the direction parallel to the long sides (the width direction) thereof. That is, the first discharge tube groups and the second discharge tube group are arranged alternately in the Y-axis direction. Note that any group of the two or more hot cathode tubes 221 that are next to one another is applicable as each of the above described discharge tube groups, and that the number of the hot cathode tubes 221 constituting each of the discharge tube groups may be changed as appropriate.

### <Seventeenth embodiment>

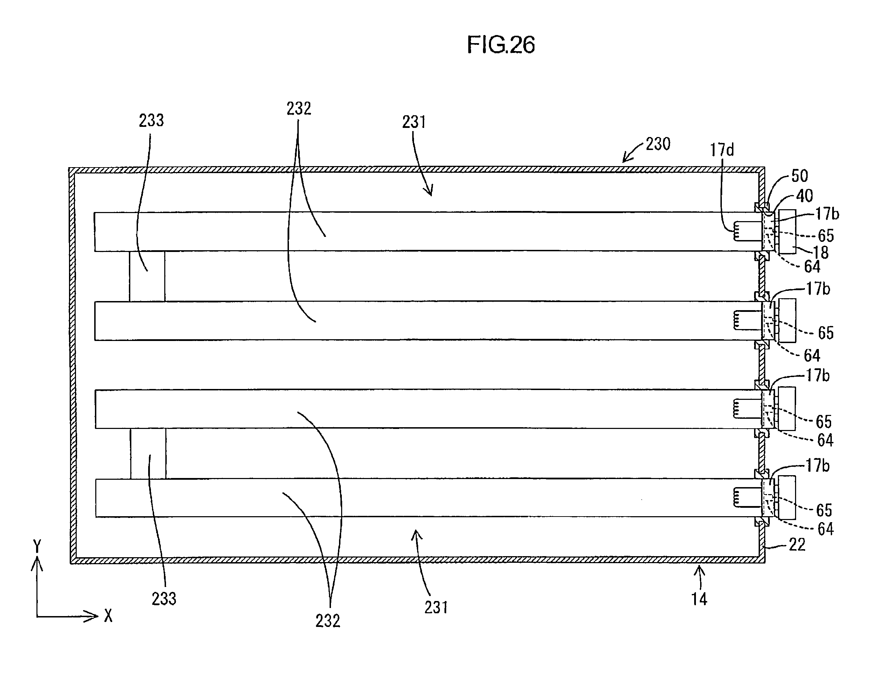

A seventeenth embodiment of the present invention is described with reference to Fig. 26. Parts identical to those of the above embodiments are denoted by the same reference signs, and redundant description is not repeated here. In a backlight unit 230 of this embodiment, a plurality of (e.g. , two) hot cathode tubes 231 is arranged in parallel with each other in the Y-axis direction. As in the case of the hot cathode tube 201 in the fourteenth embodiment described above, each of the hot cathode tubes 231 has a configuration obtained by joining main body sections 232 and a joining section 233 together. These hot cathode tubes 231 are arranged with the main body sections 232 thereof being set parallel to one another. In the respective hot cathode tubes 231, the sealed sections 65 of the exhaust pipes 64 are arranged outside the chassis 14 in a manner projecting on one end (the right side in FIG. 26) of the chassis 14 in the direction parallel to the long sides (the width direction) thereof. In other words, the sealed sections 65 that correspond to parts arranged outside the chassis 14 are unevenly distributed on one end of the chassis 14.

### <Eighteenth embodiment>

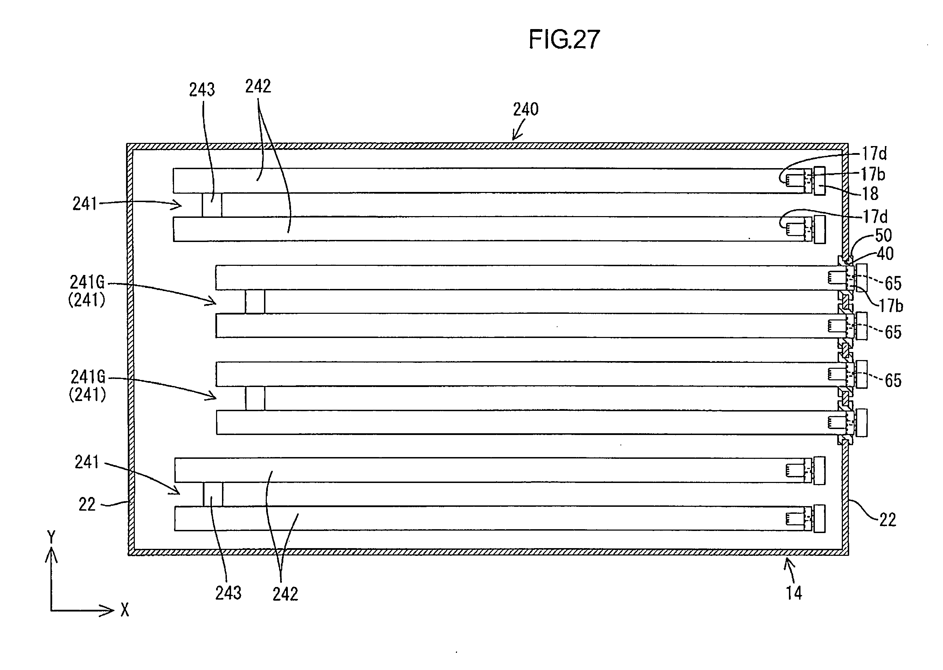

An eighteenth embodiment of the present invention is described with reference to Fig. 27. Parts identical to those of the above embodiments are denoted by the same reference signs, and redundant description is not repeated here. In a backlight unit 240 of this embodiment, apluralityof (e.g., four) hot cathode tubes 241 is arranged in parallel with each other in the Y-axis direction. As in the case of the hot cathode tube 201 in the fourteenth embodiment described above, each of the hot cathode tubes 241 has a configuration obtained by joining main body sections 242 and a joining section 243 together.

In this embodiment, the sealed sections 65 of the main body sections 242 of the hot cathode tubes 241 (denoted by a reference sign 241G) that are arranged in the middle portion of the chassis in the arrangement direction of the hot cathode tubes 241 (the Y-axis direction) are arranged outside the chassis 14. In a case where the plurality of hot cathode tubes 241 is arranged in parallel with each other, the middle portion of the chassis 14 in the direction along which the hot cathode tubes 241 are arranged in parallel with each other tends to have a relatively high temperature. Therefore, it is particularly effective to provide outside the chassis 14 the sealed sections 65 of the hot cathode tubes 241G in the middle portion to prevent a temperature of the coldest spots from rising.

Note that a condition where the hot cathode tubes 241 are arranged in the middle portion in a direction (e.g. , the Y-axis direction) along which the hot cathode tubes 241 are arranged in parallel with each other implies a condition where another hot cathode tubes 241 are arranged on either sides (the upper and lower sides in Fig. 27) of the hot cathode tubes 241G. Additionally, the number of the hot cathode tube 241G arranged in the central part is not limited two, and may be changed as appropriate.

### <Other embodiment>

The present invention is not limited to the above embodiments explained in the above description and drawings. The following embodiments may be included in the technical scope of the present invention, for example.

(1) Although each of the above embodiments uses a configuration utilizing the exhaust pipe 64 as the projecting portion, the present invention is not limited to this. The projecting portion may be any portion obtained by causing a part of the end-wall section 60 to project to be far away from the filament 17d, and the shape thereof may be changed as appropriate.

(2) Although each of the above embodiments uses a configuration having the sealed section 65 of the exhaust pipe 64 covered by the ferrule 17b, the present invention is not limited to this. Another configuration may be used where the sealed section 65 is exposed to the outside the chassis 14 without being covered by the ferrule 17b.

(3) The exhaust pipe 64 may be formed only in the end-wall section 60 on one end of the glass tube 17a in the axial direction thereof.

(4) A configuration where the hot cathode tube 17 is attached to the cutout 40 in the sidewall 22 (the wall section) of the chassis 14 is shown as an example in each of the above embodiments. However, it is not always necessary that the hot cathode tube 17 be attached to the wall section of the chassis 14. It is only required that the projecting portion (the sealed section 65 of the exhaust pipe 64) projecting from the end-wall section 60 of the hot cathode tube 17 be exposed to the outside of the chassis 14. Therefore, a position to which the hot cathode tube 17 is attached, and means used for attaching the hot cathode tube 17 may be changed as appropriate.

(5) Each of the above embodiments uses a configuration where the hot cathode tube 17 is attached to the chassis 14 with the heat dissipation member 50 provided therebetween. However, another configuration that does not include the heat dissipation member may be used.

(6) Each of the above embodiments uses a configuration where the heat dissipation member 50 is set in contact with both of the outer circumferential surface of the glass tube 17a and the ferrule 17b. However, another configuration may be used where the heat dissipation member 50 is set in contact with any one of the outer circumferential surface of the glass tube 17a and the ferrule 17b.

(7) Although silicone rubber is used for the material of the heat dissipation member in each of the above embodiments, the present invention is not limited to this. The material of the heat dissipation member may be changed as appropriate. Note that a material having a high thermal conductivity is preferable as the material of the heat dissipation member.

(8) Any cutout which penetrates the chassis in a manner enabling communication between the outer and inner sides thereof, and through which a discharge tube can be inserted is applicable as each of the cutouts in the above embodiments, and the shape thereof may be changed as appropriate.

(9) In each of the above embodiments, a case where the hot cathode tube 17 is provided in a manner extending in a direction parallel to the long sides (the x-axis direction) of the chassis 14 is shown as an example. However, the hot cathode tube 17 may be provided in a manner extending in a direction parallel to the short sides (the Y-axis direction) of the chassis 14. In a case where this configuration is used, it is only required that the configuration be such that the sealed sections 65 of the hot cathode tube 17 are projected from the sidewalls on both sides of the chassis 14 in the direction parallel to the short sides thereof.

(10) Although a configuration where the hot cathode tubes 17 are arranged in parallel with each other along the Y-axis direction is shown as an example in each of the above described embodiments, a direction along which the hot cathode tubes are arranged in parallel with each other is not limited to the Y-axis direction, and the hot cathode tubes may be arranged in parallel with each other, for example, in the x-axis direction.

(11) Although a case using the hot cathode tube 17 as a discharge tube is shown in each of the above described embodiments, the present invention also includes a case using a discharge tube (such as a cold cathode tube or a xenon tube, for example) of another type.

(12) Although a case using only one kind of discharge tubes is shown in each above described embodiment, the present invention includes a case using two or more kinds of discharge tube in combination. For example, a cold cathode tube and a hot cathode tube may be used in combination.

(13) Although a case where a liquid crystal panel and a chassis are set in a stand-up state with a direction parallel to the short sides thereof agreeing with the vertical direction is given as an example in each of the above described embodiments, the present invention also includes a case where a liquid crystal panel and a chassis are set in a stand-up state with a direction parallel to the long sides thereof agreeing with the vertical direction.

(14) Although a TFT is used as each switching component of the liquid crystal display device in each of the above described embodiments, the present invention is applicable also to liquid crystal display devices using switching components (e.g., thin-film diodes (TFDs)) other than TFTs, and to liquid crystal display devices, such as liquid crystal display devices that provide monochrome display, other than those that provide color display.

(15) Although a liquid crystal display device using a liquid crystal panel as a display panel is shown as an example in each of the above described embodiment, the present invention is also applicable to the display device using other types of display panels.

(16) Although a television receiver including a tuner is given as an example in each of the above described embodiments, the present invention is applicable also to a display device not including a tuner.

### EXPLANATION OF SYMBOLS

10, 310, 410, 510, 610, 710: Liquid crystal display device (Display device)
11: Liquid crystal panel (Display panel)
12, 200, 210, 220, 230, 240, 312, 320, 412, 512, 612, 712, 812, 912: Backlight unit (Lighting device)
14: Chassis
17, 201, 211, 221, 221D, 221E, 221F, 231, 241, 317, 417, 917: Hot cathode tube (Discharge tube)
17a, 317a, 417a, 917a: Glass tube (Tube section)
17b: Ferrule
17d: Filament (Electrode)
17A, 211A: Hot cathode tube (First discharge tube)
17B, 211B: Hot cathode tube (Second discharge tube)
17G, 241G: Hot cathode tube (Discharge tube arranged in central part of discharge tubes in direction along which discharge tubes are arranged in parallel with each other)
22: Sidewall (Sidewall section of chassis)
26: Inverter board (Power source)
40: Cutout (Tube attachment section)
50: Heat dissipation member
60: End-wall section
64: Exhaust pipe (Projecting portion)
65: Sealed section (Projecting end of projecting portion)
202, 212, 222, 232, 242: Main body section (Tube section)
203, 213, 223, 233, 243: Joining section (Tube section)
311, 311A, 311B: Ventilation opening (Cooling mechanism)
617D, 617F: Discharge tube group (First discharge tube group)
617E: Discharge tube group (Second discharge tube group)
411: Cooling fan (Cooling mechanism)
511: Cooling element (Cooling mechanism)
611: Heat pipe (Cooling mechanism)
720: Circulation pipe
721: Refrigerant circulation pump
N1: Linear distance (Linear distance from electrode to projecting end of projecting portion)
N2: greatest linear distance (Greatest linear distance from electrode to end-wall section at one end)
TV: Television receiver
Ca: Cabinet (Frame-like section; housing member)
Cal : Opening
Cb: Cabinet (Housing member)

## Claims

1. A lighting device comprising:
a discharge tube, the discharge tube including a tube section and an electrode arranged inside the tube section, the tube section having an end wall on one end in an axial direction thereof and a projecting portion projecting from the end wall so as to be away from the electrode; and
a chassis housing the discharge tube, wherein:
the projecting portion has a projecting end that is provided outside the chassis; and
a linear distance between the electrode and the projecting end of the projecting portion is greater than a greatest linear distance between the electrode and the end wall on the one end.

2. The lighting device according to claim 1, wherein:
the tube section includes an exhaust pipe projecting from the one end of the tube section and configured to exhaust air from the tube section in manufacturing the discharge tube; and
the exhaust pipe is configured as the projecting portion by closing an end of the exhaust pipe.

3. The lighting device according to any one of claims 1 and 2, further comprising a power source configured to supply driving power to the discharge tube, wherein:
the discharge tube includes a ferrule configured to electrically connect the electrode and the power source to each other; and
the ferrule is attached to the tube section to cover the projecting portion.

4. The lighting device according to any one of claims 1 to 3, wherein:
the chassis has a wall section and a cutout penetrating the wall section; and
the cutout is provided as a tube attachment section to which the tube section is attached with penetrating the cutout.

5. The lighting device according to claim 4, further comprising a heat dissipation member provided between an edge of the cutout and the tube section, the heat dissipation member being configured to dissipate heat from the tube section toward the chassis.

6. The lighting device according to any one of claims 1 to 5, wherein:
the discharge tube includes a plurality of discharge tubes arranged in parallel with each other in the chassis, and the plurality of discharge tubes includes first discharge tubes and second discharge tubes;
each of the first discharge tubes has the projecting end of the projecting portion that is disposed outside the chassis and projects from one end of the chassis in a width direction of the chassis;
each of the second discharge tubes has the projecting end of the projecting portion that is disposed outside the chassis and projects from another end of the chassis in a width direction of the chassis; and
the first discharge tubes and the second discharge tubes are alternately arranged in parallel with each other.

7. The lighting device according to any one of claims 1 to 5, wherein:
the discharge tube includes a plurality of discharge tubes and the plurality of discharge tubes is arranged in parallel with each other in the chassis;
the discharge tubes include a plurality of discharge tube groups each including at least two adjacent discharge tubes;
the discharge tube groups include a first discharge tube group and a second discharge tube group;
the projecting end of the projecting portion of each discharge tube of the first discharge tube group is disposed outside the chassis and projects from one end of the chassis in a width direction of the chassis;
the projecting end of the projecting portion of each discharge tube of the second discharge tube group is disposed outside the chassis and projects from another end of the chassis in a width direction of the chassis; and
the first discharge tube group and the second discharge tube group are alternately arranged to be parallel to each other.

8. The lighting device according to any one of claims 1 to 5, wherein:
the discharge tube includes a plurality of discharge tubes that is arranged in parallel with each other in the chassis; and,
each projecting end of the projecting portions of the discharge tubes are provided outside the chassis so as to project from one end of the chassis in a width direction of the chassis.

9. The lighting device according to any one of claims 1 to 5, wherein:
the discharge tube includes a plurality of discharge tubes that is arranged in parallel with each other in the chassis; and
only the discharge tubes that are arranged in a middle portion of the chassis in an arrangement direction of the discharge tubes have projecting ends of the projecting portions that are provided outside the chassis.

10. The lighting device according to any one of claims 1 to 9, wherein the discharge tube is substantially L-shaped.

11. The lighting device according to any one of claims 1 to 9, wherein the discharge tube is substantially U-shaped.

12. The lighting device according to any one of claims 1 to 9, wherein the discharge tube has a meandering shape.

13. The lighting device according to any one of claims 1 to 12, wherein the tube section includes a plurality of tube sections and the discharge tube is formed by joining the plurality of tube sections together.

14. The lighting device according to any one of claims 1 to 13, wherein the discharge tube is a hot cathode tube.

15. A display device comprising:
the lighting device according to any one of claims 1 to 14; and
a display panel configured to provide display by using light from the lighting device.

16. The display device according to claim 15, wherein the display panel is a liquid crystal panel using liquid crystal.

17. The display device according to any one of claims 15 and 16, further comprising a housing member configured to house the display panel and the lighting device, wherein:
the housing member includes an opening section through which a display surface of the display panel is exposed, and a frame-like section surrounding the opening section; and
the projecting end of the projecting portion is provided in the housing member.

18. The display device according to claim 17, further comprising a cooling mechanism provided in the housing member and configured to cool the projecting end of the projecting portion.

19. The display device according to claim 18 wherein the cooling mechanism includes a ventilation opening penetrating through the housing member.

20. The display device according to any one of claims 18 and 19, wherein the cooling mechanism includes a cooling fan conf igured to send air toward the projecting end of the projecting portion and thereby cool the projecting end of the projecting portion.

21. The display device according to any one of claims 18 to 20, wherein the cooling mechanism includes a cooling element configured to come in contact with the projecting end of the projecting portion and thereby cool the projecting end of the projecting portion.

22. The display device according to any one of claims 18 to 21, wherein the cooling mechanism includes a heat pipe configured to transfer heat of the projecting end of the projecting portion to the housing member.

23. The display device according to any one of claims 18 to 22, wherein the cooling mechanism includes:
a refrigerant configured to cool the projecting end of the projecting portion;
a circulation pipe in which the refrigerant is contained; and
a refrigerant circulation pump connected to the circulation pipe, and configured to circulate the refrigerant within the circulation pipe.

24. The display device according to claim 23, wherein the refrigerant is water.

25. A television receiver comprising the display device according to any one of claims 15 to 24.
